(19) Europäisches Patentamt
European Patent Office
Office européen des brevets

(11) **EP 4 742 474 A1**

(12) **EUROPEAN PATENT APPLICATION**

(43) Date of publication:
**13.05.2026 Bulletin 2026/20**

(51) International Patent Classification (IPC):
***H02H 3/33*** *(2006.01)*

(21) Application number: **24212209.1**

(22) Date of filing: **11.11.2024**

(52) Cooperative Patent Classification (CPC):
**H02H 3/32; H02H 3/33**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Instagrid GmbH**
**71636 Ludwigsburg (DE)**

(72) Inventor: **Fiedler, Florian**
**Berlin (DE)**

(74) Representative: **Eisenführ Speiser**
**Patentanwälte Rechtsanwälte PartGmbB**
**Postfach 10 60 78**
**28060 Bremen (DE)**

(54) **SYSTEMS AND METHODS FOR PROVIDING LEAKAGE CURRENT PROTECTION**

(57) Systems, methods and software products for operating a power supply circuit (PSC). The methods comprise: providing electrical power, from a power source, at a first socket of a power supply circuit and a second socket and/or third socket of PSC; concurrently monitoring, by a current sensing element (i) first currents on first lines (wherein the first lines facilitate electrical connection of the power source to the first socket of the plurality of sockets), and (ii) second currents on second lines (wherein the second lines facilitate electrical connection of the power source to the second socket of the plurality of sockets; detecting an insulation fault based on a current imbalance in the concurrent monitoring; and causing at least one circuit breaker of the power supply circuit to trip when the insulation fault is detected. The first currents have a polarity that is opposite of a polarity of the second currents. The present teachings also disclose use of a current sensor in a power supply circuit.

FIG. 10A

EP 4 742 474 A1

**Description**

BACKGROUND

Description of the Related Art

Battery cell packs are often used to power electronic devices. Different combinations of the battery cell packs are used to provide different output voltages.

SUMMARY

The present disclosure concerns implementing systems, methods and software products for operating a power circuit, such as a power supply circuit. The methods comprise: providing electrical power, from a power source, at a first socket of a power supply circuit and a second socket and a third socket of the power supply circuit; concurrently monitoring, by a current sensing element, (i) first currents on first lines (wherein the first lines facilitate electrical connection of the power source to the first socket of the plurality of sockets), and (ii) second currents on second lines (wherein the second lines facilitate electrical connection of the power source to the second socket of the plurality of sockets); detecting an insulation fault based on a current imbalance in the concurrent monitoring; and optionally causing at least one circuit breaker of the power supply circuit to trip when the insulation fault is detected. The first currents have a polarity that is opposite to a polarity of the second currents.

The present disclosure also concerns a power supply circuit, comprising: a power source circuit (e.g., a power source); a plurality of sockets electrically connected to the power source circuit; at least one circuit breaker connected between the power source circuit and the plurality of sockets; a current sensing element configured to concurrently monitor (i) first currents on first lines (wherein the first lines facilitate electrical connection of the power source circuit to a first socket of the plurality of sockets), and (ii) second currents on second lines (wherein the second lines facilitate electrical connection of the power source circuit to a second socket of the plurality of sockets); and a controller configured to detect an insulation fault based on a current imbalance in the concurrent monitoring, and optionally cause that at least one circuit breaker to trip when the insulation fault is detected. The first currents have a polarity that is opposite to a polarity of the second currents.

BRIEF DESCRIPTION OF THE DRAWINGS

The present solution will be described with reference to the following drawing figures, in which like numerals represent like items throughout the figures.

FIG. 1A provides a schematic diagram of an example energy storage module, according to some non-limiting embodiments or aspects.

FIG. 1B provides an illustrative block diagram of a circuit in the energy storage module.

FIG. 1C provides a circuit diagram of an energy storage module, according to some non-limiting embodiments or aspects.

FIG. 1D provides a perspective view of an energy storage module.

FIG. 1E provides an illustrative circuit diagram for the transistor active bridge circuit. FIGS. 1A-1E are collectively referred to as "FIG. 1".

FIGS. 2A-2C (collectively referred to as "FIG. 2") are schematic diagrams of an example energy storage module container of energy storage modules, according to some non-limiting embodiments or aspects.

FIGS. 3A and 3B (collectively referred to as "FIG. 3") are schematic diagrams of an example power supply system, according to some non-limiting embodiments or aspects.

FIG. 4 is a circuit diagram of an example power supply system, according to some non-limiting embodiments or aspects.

FIG. 5 provides an illustration that is useful for understanding a novel technique for controlling the energy storage modules in accordance with the present solution.

FIG. 6 provides an illustration of a system in which a single electronic device is supplied power from a power supply.

FIG. 7 provides an illustration of a system in which two electronic devices are supplied power from a power supply. In this case, there may be a fault condition but no danger to the user since the enclosures are electrically connected.

FIG. 8 provides an illustration of a system in which an insulation fault occurs when two electronic devices are being supplied power from a power supply.

FIGS. 9A-9C (collectively referred to as "FIG. 9") provide illustrations of a system in which two electronic devices are supplied power from a power supply with one or more residual current devices (RCD) to provide leakage current protection.

FIGS. 10A-10D (collectively referred to as "FIG. 10") provide illustrations of a system in which two electronic devices are supplied power from a power supply with a residual current sensing element (RCSE) to provide leakage current protection.

FIGS. 11A-11B (collectively referred to herein as "FIG. 11") provide illustrations of other power supply architectures with more than three sockets.

FIG. 12 provides a flow diagram of an illustrative method for operating a circuit to provide with leakage current protection.

FIG. 13 provides a flow diagram of an illustrative method for operating a power supply circuit.

FIG. 14 provides a flow diagram of another illustrative method for operating a power supply circuit.

FIG. 15 provides a block diagram of an illustrative device.

DETAILED DESCRIPTION

The present solution is described with reference to the attached figures. The figures are not drawn to scale and they are provided merely to illustrate the instant solution. Several aspects of the present solution are described below with reference to example applications for illustration. It should be understood that numerous specific details, relationships, and methods are set forth to provide a full understanding of the present solution. One having ordinary skill in the relevant art, however, will readily recognize that the present solution can be practiced without one or more of the specific details or with other methods. In other instances, well-known structures or operations are not shown in detail to avoid obscuring the present solution. The present solution is not limited by the illustrated ordering of acts or events, as some acts may occur in different orders and/or concurrently with other acts or events. Furthermore, not all illustrated acts or events are required to implement a methodology in accordance with the present solution.

It should also be appreciated that the terminology used herein is for the purpose of describing particular embodiments only and is not intended to be limiting of the present solution. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this solution belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

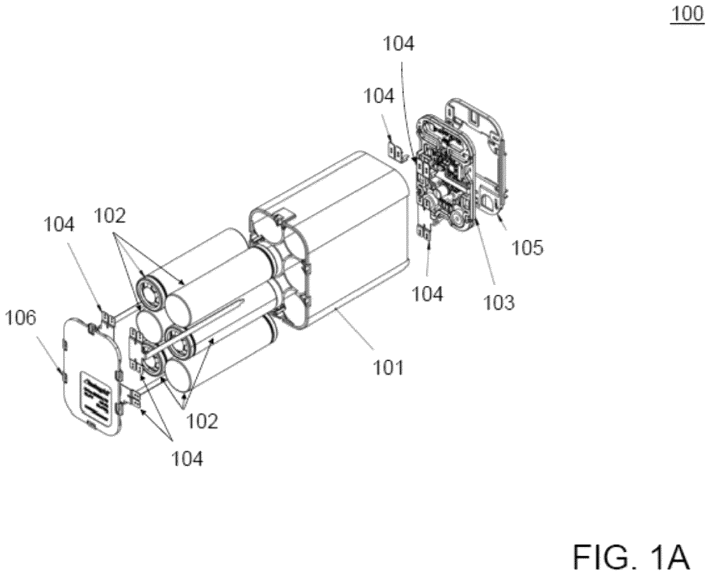

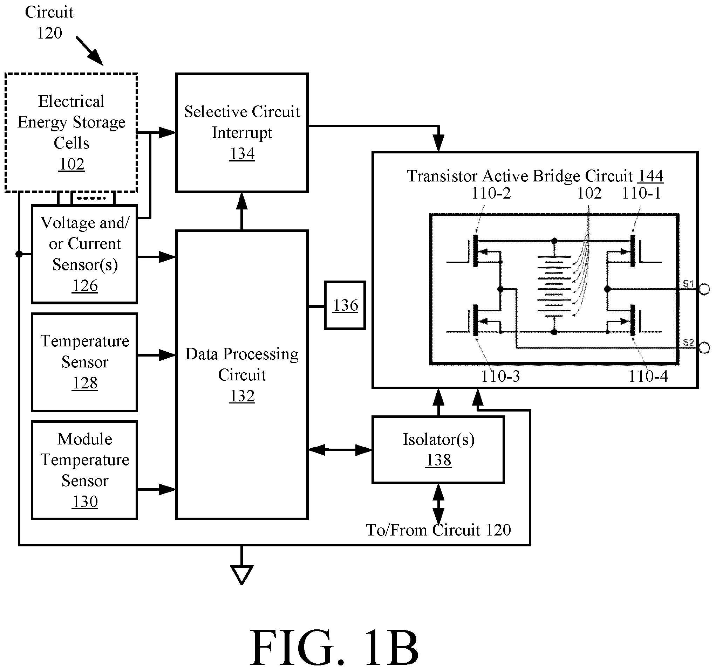

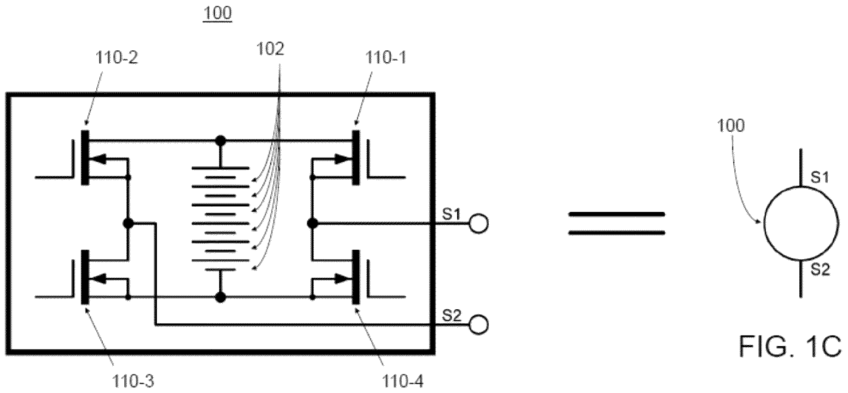

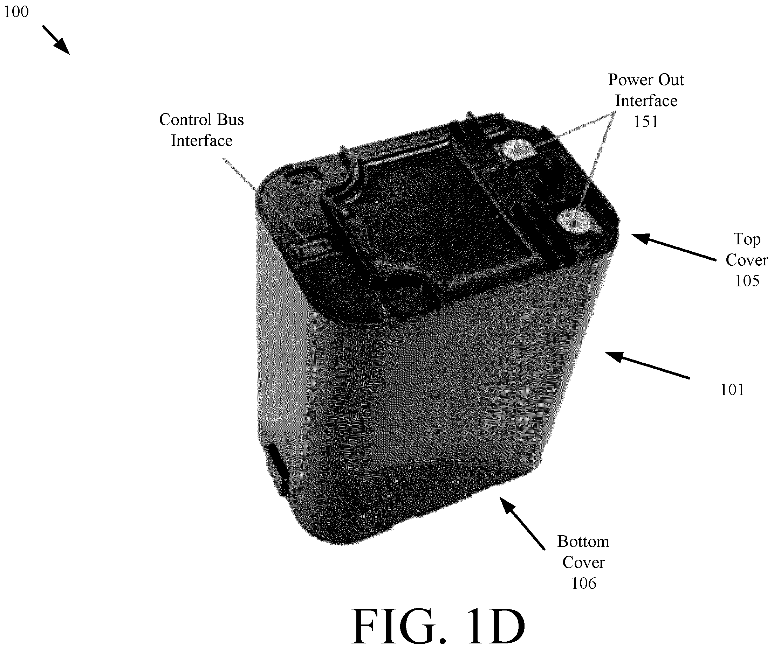

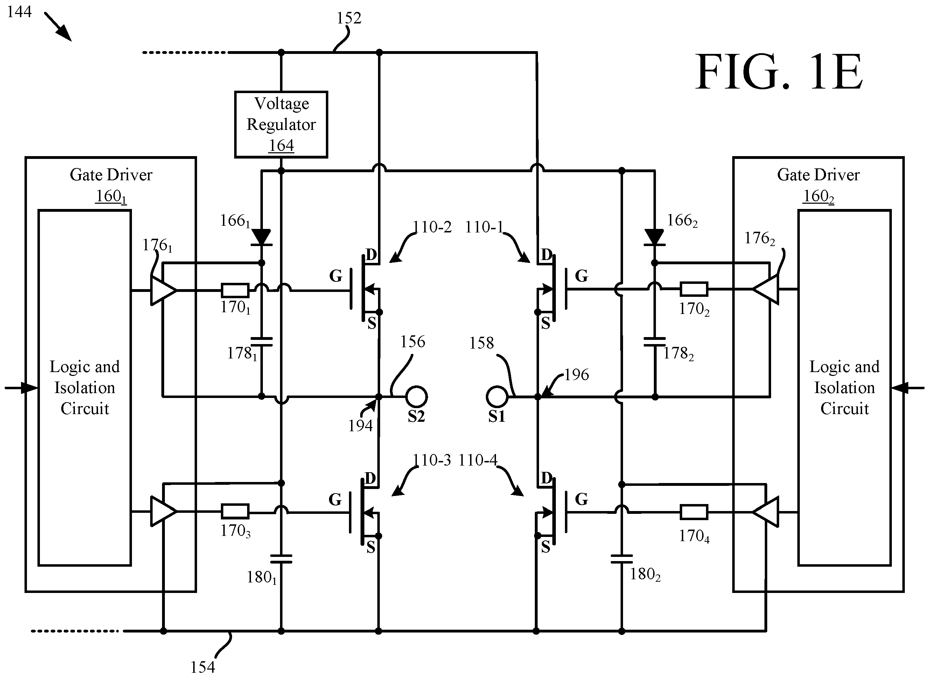

Referring now to FIG. 1A, depicted is a schematic diagram of an example energy storage module **100**, according to some non-limiting embodiments or aspects. As shown in FIG. 1, energy storage module **100** may include housing **101**, at least one energy storage component **102**, module controller **103**, connectors **104**, top cover **105**, and bottom cover **106**. The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

In some non-limiting embodiments or aspects, housing **101** may include plastic, metal, any combination thereof, and/or the like. For example, housing **101** may include a plastic housing.

In those or other non-limiting embodiments or aspects, housing **101** may be configured to hold at least one (e.g., a plurality of) energy storage components **102.** For example, as shown in FIG. 1, housing **101** may be shaped to have six energy storage components **102** uniformly distributed in an interior space defined by housing **101.**

In those or other non-limiting embodiments or aspects, each energy storage component **102** may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1, each energy storage component **102** may include a cylindrical cell (e.g., lithium-ion battery cell).

In those or other non-limiting embodiments or aspects, module controller **103** may include a controller and associated circuitry. Optionally, module controller **103** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In those or other non-limiting embodiments or aspects, connectors **104** may connect the terminals (e.g., ends) of each energy storage component **102** to module controller **103.** Additionally or alternatively, at least one connector **104** may connect at least one terminal (e.g., end) of one energy storage component **102** to another terminal of another energy storage component **102.** For example, connectors **104** may include a conductive (e.g., electrically conductive) material, such as metal and/or the like. In those or other non-limiting embodiments or aspects, some or all of the connectors **104** may be used for energy storage component **102** (e.g., cell) voltage measurements.

In those or other non-limiting embodiments or aspects, each of top cover **105** and bottom cover **106** may include plastic, metal, any combination thereof, and/or the like. For example, each of top cover **105** and bottom cover **106** may include a plastic cover. In some non-limiting embodiments or aspects, top cover **105** and bottom cover **106** may be configured to (e.g., sized and shaped to) cover openings at top and bottom ends, respectively, of housing **101.** In those or other non-limiting embodiments or aspects, top cover **105** may include a first electrical connection (e.g., **S1,** as described herein), a second electrical connection (e.g., **S2,** as described herein), and/or at least one communication connection, as described herein. For example, these connections may allow for electrical and/or communicative connection between module controller **103** and external components (e.g., other components of the power supply system external to the energy storage module housing).

In those or other non-limiting embodiments or aspects, energy storage module **100** may include a battery module. For example, the battery module may include at least one energy storage component (e.g., a battery cell, such as a rechargeable battery cell). For the purpose of illustration, as shown in FIG. 1A, the battery module may include six energy storage components (e.g., rechargeable battery cells, such as lithium-ion cells, supercapacitors, and/or the like).

In those or other non-limiting embodiments or aspects, energy storage components **102** (e.g., battery cells) of energy storage module **100** may be connected in series. In some non-limiting embodiments or aspects, energy storage components **102** (e.g., battery cells) of energy storage module **100** may be connected in parallel.

In those or other non-limiting embodiments or aspects, at least some (e.g., a subset of) energy storage components **102** may be connected in series, for example, so that the combined (e.g., summed and/or the like) voltage of the series-connected components satisfies (e.g., equals, exceeds, and/or the like) the target (e.g., desired) operating voltage of energy storage module **100.** In those or other non-limiting embodiments or aspects, at least some (e.g., a subset of) energy storage components **102** may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module **100).** For example, energy storage module **100** may include a plurality of subsets of energy storage components **102** such that energy storage components **102** of each subset are connected in series (e.g., to combine to output the desired module voltage) or connected in parallel (e.g., to combine to output the desired module current).

In those or other non-limiting embodiments or aspects, energy storage module **100** may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, the disclosures of each of which are hereby incorporated by reference in their entireties.

As shown in FIG. 1B, a circuit **120** of the energy storage module **100** comprises voltage and optionally, current sensors **126** connected to the energy storage components **102.** The energy storage components **102** may include, but are not limited to, electrical energy storage cells as shown in FIG. 1B. These sensors **126** are configured to measure the voltage and/or current of each energy storage component. Circuit **120** may also comprise temperature sensors **128** and a module temperature sensor **130.** Each temperature sensor **128** is configured to measure a temperature of one or more energy storage components, while the module temperature sensor **130** is configured to measure an internal temperature of the energy storage module. These sensor measurements are communicated from the sensors **126, 128, 130** to the data processing circuit **132** for processing. The data processing circuit **132** is connected to isolators **138.** The data processing circuit **132** can perform operations to communicate sensor measurements as sensor data to the module controller **103** or an external circuit, and/or perform operations to analyze the sensor measurements to determine if certain criteria is met. For example, if a parameter measurement falls outside of defined range at a given time or for a certain amount of time, then the data processing circuit **132** causes the selective circuit interrupt **134** to transition from a closed state to an open state such that the energy storage module **100** is turned off. The parameter measurement can include a voltage measurement, a current measurement or a temperature measurement.

The data processing circuit **132** may be configured to access datastore(s) **136.** Datastore(s) **136** can comprise computer-readable storage medium on which is stored one or more sets of instructions configured to implement one or more of the methodologies, procedures, or functions described herein. The instructions can also reside, completely or at least partially, within the data processing circuit **132** during execution thereof by the data processing circuit **132.** Datastore(s) **136** and data processing circuit **132** also can constitute machine-readable media. The term "machine-readable media", as used here, refers to a single medium or multiple media (e.g., a centralized or distributed database, and/or associated caches and servers) that store the one or more sets of instructions. The term "machine-readable media", as used here, also refers to any medium that is capable of storing, encoding or carrying a set of instructions for execution by the data processing circuit **132** and that cause the data processing circuit **132** to perform any one or more of the methodologies of the present disclosure. Data processing circuit **132** can include, but is not limited to, processor(s).

Circuit **120** also comprises a switching circuit, shown here in a non-limiting manner as transistor active bridge circuit **144.** Switching circuit comprises at least one switching element. As some non-limiting examples, the switching circuit may be realized as a bridge topology comprising switching elements, e.g., as a full H-bridge or a half H-bridge. The switching circuit may be in any form e.g., which facilitates electrical connection of one or more of the storage components **102** to the electrical connection **S1** and/or **S2.** The switching circuit or the transistor active bridge circuit **144** comprises at least one switching element (e.g., first switching element **110-1,** second switching element **110-2,** third switching element **110-3,** and/or fourth switching element **110-4,** collectively referred to as "switching elements **110,"** and individually referred to as "switching element **110"),** first electrical connection **S1,** and second electrical connection **S2.**

In some non-limiting embodiments or aspects, switching elements **110** may be part of (e.g., integrated on, connected to, and/or the like) module controller **103.** In some non-limiting embodiments or aspects, first electrical connection **S1** and/or second electrical connection **S2** may be part of (e.g., integrated on, connected to, and/or the like) module controller **103** and/or may extend through top cover **105.** The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

As shown in the example in FIG. 1B, energy storage module **100** may include six energy storage components **102** (e.g., rechargeable battery cells and/or the like) connected in series. In some non-limiting embodiments or aspects, energy storage components **102** may be in other arrangements and/or have other connections, as described herein.

In some non-limiting embodiments or aspects, switching elements **110** may be switched (e.g., opened, closed, activated, deactivated, and/or the like) to selectively connect energy storage component(s) **102** to first electrical connection **S1** and/or second electrical connection **S2,** e.g., to control a module voltage across first electrical connection **S1** and second electrical connection **S2.** For example, switching elements **110** may be switched so that: (1) first electrical connection **S1** and second electrical connection **S2** are both connected to negative side (e.g., DC minus) of energy storage component(s) **102** (e.g., series connected storage components **102);** (2) first electrical connection **S1** is connected to the negative side (e.g., DC minus) of energy storage component(s) **102** and second electrical connection **S2** is connected to the positive side (e.g., DC plus) of energy storage component(s) **102;** or (3) first electrical connection **S1** is connected to the positive side (e.g., DC plus) of energy storage component(s) **102** and second electrical connection **S2** is connected to the negative side (e.g., DC minus) of energy storage component(s) **102.** As such, the voltage across first electrical connection S1 and second electrical connection **S2** may be zero, negative, or positive, respectively.

For the purpose of illustration by way for a few examples, to connect both first electrical connection **S1** and second electrical connection **S2** to the negative side (e.g., DC minus) of energy storage component(s) **102,** fourth switching element **110-4** and third switching element may both be activated (e.g., closed, set to act as a closed switch, switched ON, and/or the like), while second switching element **110-2** and first switching element **110-1** are deactivated (e.g., open, set to act as an open switch, switched OFF, and/or the like). To connect first electrical connection S1 to the negative side (e.g., DC minus) and connect second electrical connection **S2** to the positive side (e.g., DC plus) of energy storage component(s) **102,** fourth switching element **110-4** and second switching element **110-2** may be activated, while third switching element **110-3** and first switching element **110-1** are deactivated. To connect first electrical connection S1 to the positive side (e.g., DC plus) and second electrical connection **S2** to the negative side (e.g., DC minus) of energy storage component(s) **102,** first switching element **110-1** and third switching element **110-3** may be activated, and fourth switching element **110-4** and second switching element **110-2** may be deactivated. In some non-limiting embodiments or aspects, the switching elements **110** may be operated to be in states such as: a high-impedance (Hi-Z) state (e.g., in which all of the switching elements **110** are deactivated), a bypass state (e.g., in which the low-side switching elements **110-3** and **110-4** are activated while the high-side switching elements **110-1** and **110-2** are deactivated), and two polarity states (e.g., in which the energy storage component(s) **102** are connected between the first electrical connection **S1** and the second electrical connection **S2** in opposite polarity manner). Even though in the discussed examples, the storage components **102** are connected between the electrical connections **S1, S2** as a stack, it shall be appreciated that individual cell/storage component level connection may also be possible, e.g., by providing additional switching components to the switching circuit. Thus, each, some, or all storage components **102** of the energy storage module **100** may be connectable at the electrical connections **S1** and/or **S2**.

In those or other non-limiting embodiments or aspects, each switching element **110** may include at least one of a transistor (e.g., bipolar transistor, field-effect transistor (FET), metal-oxide-semiconductor field-effect transistor (MOSFET), and/or the like), a switch, a contactor, any combination thereof, and/or the like. In those or other non-limiting embodiments or aspects, the energy storage module **100** may include one or more driver circuits, such as a gate driver circuit, for driving each switching element **110**. For example, the driver circuits may be part of (e.g., integrated on, connected to, and/or the like) module controller **103**.

In those or other non-limiting embodiments or aspects, each switching element **110** may be driven, or controlled, via the module controller **103**. For example, module controller **103** may control the switching elements **110** to selectively connect energy storage component(s) **102** to first electrical connection **S1** and/or second electrical connection **S2,** as described herein. For example, module controller **103** may be connected to each switching element **110** in order to drive, or optionally control, such switching element **110**. In those or other non-limiting embodiments or aspects, the module controller **103** provides signals to the gate driver circuit for driving the switching elements **110**.

As shown in FIG. 1C, each energy storage module **100** may be represented by the symbol (e.g., for brevity and clarity of the following drawings). The symbol is shown on the right-hand side. On the left-hand side, transistor active bridge circuit **144** is shown in a non-limiting manner, for demonstrating a possible relationship between terminals **S1, S2** of the symbol **100** and switching circuit which in this example is shown as bridge circuit **144**.

FIG. 1D provides an illustration of an energy storage module **100**. An assembly view of the energy storage module **100** is provided in FIG. 1A. Energy storage module **100** comprises a housing **101** in which energy storage components **102** are housed so as to maintain certain positions relative to each other. The energy storage components **102** can be arranged in two rows of three energy storage components as shown in FIG. 1A. The present solution is not limited in this regard. The energy storage components can have a different arrangement than that shown in FIG. 1A. Any number of energy storage components can be provided in the energy storage module in accordance with a given application. Each energy storage component may include, but is not limited to, a lithium-ion cell. The lithium-ion cell may have a cylindrical shape as shown or another shape (e.g., a rectangular shape) not shown.

A top cover **105** and a bottom cover **106** are provided for the housing **101**. The covers **105, 106** may be configured to provide an environment seal with the housing **101**. The environmental seal may be facilitated by gaskets (not visible or shown in FIG. 1D and/or FIG. 1A) compressed between the covers **105, 106** and the housing's sidewalls. The energy storage module **100** also comprises a power out interface **151**. It shall be appreciated that electrical connections **S1, S2** may be part of the power out interface **151**.

The safe and reliable operation of the energy storage module **100** may require the constant monitoring of each energy storage component **102,** e.g., to detect when its current (optional), voltage and/or temperature fall outside of defined operating range(s). This monitoring may be achieved using a circuit **120** that may also be housed in the housing **101**. Conductive connectors **104** are provided to connect the energy storage components **102** to the circuit **120** for at least voltage measurements. In some non-limiting examples, the conductive connectors **104** may also be used for leading operationally generated heat away from the circuit **120** (e.g., heat generated by switching elements **110)** preferably away from the energy storage module **100**. Alternatively or in addition, some non-limiting examples, the circuit **120** may be arranged such that the storage components **102** are also used for leading operationally generated heat away from the circuit **120**. For example, a thermal coupling (e.g., passive and/or active, such as gas or fluid cooled) may be provided between the circuit **120** and one or more of the storage components **102**. Alternatively or in addition, as some non-limiting examples, the power out interface **151** (e.g., via any of the connections **S1** and/or **S2)** may be used for leading operationally generated heat away from the circuit **120**. For example, conductive connectors **104** and connections **S1** and **S2** are realized in electrically conductive materials such as metal. Usually electrical conductors are also good thermal conductors. This can be leveraged to also act as heat sinks or heat pipes for transporting operationally generated heat (e.g., heat generated when the switching components are conducting current) away from the circuit **120**. It shall be appreciated that either alone or in any combination, these measures can make the energy storage module **100** more compact, and in some cases also allow hermetically sealing of the energy storage module **100**. This can further result in a more compact system which uses one or more of such energy storage modules **100**. These measures can also result in a module and/or system comprising one or more modules that do not require active cooling (e.g., a fan or any other types of additional component or medium used for cooling).

As shown in a non-limiting example of FIG. 1E, the switching circuit or transistor active bridge circuit **144** comprises gate drivers $160_1$, $160_2$, a voltage regulator **164**, diodes $166_1$, $166_2$ (collectively referred to as **"166"**), optional resistors $170_1$, $170_2$, $170_3$, $170_4$ (collectively referred to as **"170"**), capacitors $178_1$, $178_2$, $180_1$, $180_2$, and a transistor active bridge **144**. The transistor active bridge circuit **144** is supplied a voltage waveform from the energy storage components **102**. As such, the transistor active bridge circuit **144** is connected to energy storage components **102** via input lines **152, 154**. Input line **152** may be referred to as a high input line, while input line may be referred to as a low input line **154**. The transistor active bridge circuit **144** is also connected between a pair of output lines **156, 158**. The output lines **156, 158** are connected to the power out interface **151** of FIG. 1D. With reference to the previous FIGs and discussion, it shall be appreciated that the high input line **152** may be connected to the positive terminal of the storage component stack **102**, while the low input line **154** may be connected to the negative terminal of the stack of storage components **102**. For example, FIG. 1C shows storage components **102** arranged as a stack, where positive terminal of the stack is connected to drain terminals of transistors **110-1** and **110-2**, while the negative terminal is connected to drain terminals of transistors **110-3** and **110-4.**

The transistor active bridge circuit **144** includes a plurality of switching elements or switches, shown in this example as field-effect transistors (FETs) **110-2, 110-3, 110-1, 110-4** of an N-channel type. Each of the FETs may comprise a metal-oxide semiconductor FET (MOSFET), but other types of switches or FETs (e.g., insulated gate bipolar transistors (IGBTs), bipolar junction transistors (BJTs), gate turn-off thyristors (GTOs) or their likes or combinations) instead of the shown type can also be contemplated. Each FET **110-2, 110-3, 110-1, 110-4** has three (3) terminals respectively defined as a source **S**, a gate **G** and a drain **D**. An electrical path is be provided from the source to the drain of each FET **110-2, 110-3, 110-1, 110-4.** This path is generally referred to herein as the source-drain path. A source-drain path of first FET **110-2** is connected in series with a source-drain path of the second FET **110-3**. The series connected transistor pair **110-2, 110-3** form a first series transistor combination that is connected across the input lines **152, 154**. A source-drain path of the third FET **110-1** is connected in series with a source-drain path of the fourth FET **110-4** to form a second series transistor combination connected across the input lines **152, 154.**

The transistor active bridge circuit **144** can have an output defined by output lines **156, 158**. A first one of the output lines **156** can be connected to the first series combination **110-2/110-3** at an interconnection point **194** between the first and the second field-effect transistors **110-2, 110-3**. A second one of the output lines **158** can be connected to the second series combination **110-1/110-4** at an interconnection point **196** between the third and fourth field-effect transistors **110-1, 110-4.**

Gate driver $160_1$ is provided for driving the gate **G** of each FET **110-2, 110-3.** Similarly, gate driver $160_2$ is provided for driving the gate **G** of each FET **110-1, 110-4.** In this regard, the gate drivers are configured to supply a voltage to the gate **G** of each respective FET at certain times for switching the FET to its "on" state or "off" state. The gate drivers are also configured to stop supplying the voltage to the gate **G** of the FET at certain times for switching the FET to its "on" state or "off" state. Gate driver circuits are well known. Known or to be known gate driver circuit can be used here.

When the gate drivers communicate gate control signals to the FETs, the FETs **110-2, 110-3, 110-1, 110-4** will be biased and switch to their "on" states. In effect, current will flow between the drain **D** and source **S** of these FETs. The FETs transition back to their "off" states when the gate control signals are no longer being output from the gate drivers. The gate drivers are configured to prevent the two FETs in each series pair **110-2/110-3** and **110-1/110-4** from being closed simultaneously or concurrently.

The FETs are switched alternatively by the gate driver to provide a certain power output across lines **156, 158**. For example, when the energy storage module is in its "on" state, one of the high side FETs **110-2, 110-1** is transitioned to its "on" state for a given period of time (e.g., 1 microsecond ($\mu$s) - 15 milliseconds (ms), as some further non-limiting examples, a few microseconds ($\mu$s), 10 $\mu$s, 20 $\mu$s, 50 $\mu$s, 0.1 ms, 2 ms, 5 ms, or even 10 ms). When the energy storage module is in its "off" state, the two high side FETs **110-2, 110-1** are in their "off" states and the two low side FETs **110-3, 110-4** are in their "on" states. In effect, the two low side FETs are conducting while the two high side FETs are not conducting.

The capacitors **178** are provided to store charge for driving the respective FETs **110-2, 110-1**. The respective capacitor **178** is chargeable via their respective diode **166**. In this regard, the supply voltage for the high-side gate driver output stages $176_1$, $176_2$ is stored in capacitors $178_1$, $178_2$. Each of the capacitors $178_1$, $178_2$ is recharged when the corresponding output line **156, 158** is slewing towards the low supply line **154**, e.g., when the corresponding low side FETs **110-3** or **110-4** is switched to the "on" state. For example, when FET **110-3** is turned "on", the potential at output **S2** is pulled towards the potential at source **S** of FET **110-3**. At this time, diode $166_1$ becomes conductive such that current flows from the voltage regulator **164** through capacitor $178_1$ and transistor **110-3** to line **154**. In effect, capacitor $178_1$ is recharged as the current flows therethrough. When the potential at output **S2** is slewing towards the high supply line **152**, the diode $166_1$ acts as a blocking diode such that charge on the capacitor $178_1$ is prevented from flowing back towards the voltage regulator **164**. Thus, charged capacitor $178_1$ supplies voltage to the high-side gate driver output stage $176_1$ for driving the gate terminal of FET **110-2**. At some point, the capacitor will be discharged to a level which may cause the gate driver $160_1$ to enter an undervoltage mode in which the gate driver is not operational anymore. The capacitor is recharged before it reaches this level of discharge. An advantage of the preset teachings is that switching of the low-side FETs **110-3, 110-4** can be used to simultaneously charge their corresponding capacitor **178** which is used for driving the high-side FETs **110-2, 110-1.**

It is rather common in gate driver circuits to use charge pumps or transformer isolated (e.g., multi-channel) DC-DC converters to facilitate power supply to the gate driver(s). These circuits tend to be relatively expensive. As evident from FIG. 1E, circuit **144** is absent of any charge pumps and therefore is less costly than conventional transistor active bridge circuits. The elimination of the charge pumps was achieved using circuit components **166, 178** to provide the voltage for the high-side gate driver output stages **176** in a controlled manner to avoid or minimize the likelihood that the gate driver **160₁** enters an undervoltage mode.

Capacitors **180₁, 180₂** have a similar role as capacitors **178₁, 178₂**. However, capacitors **180₁, 180₂** are permanently supplied a voltage signal by the voltage regulator **164.** As such, the low-side FETs **110-3, 110-4** can be turned "on" for as long as desired. When low-side FET **110-3** is in its "on" state, the potential at output **S2** is equal to the potential at source **S** of FET **110-3.** Likewise, the potential at output **S1** is equal to the potentiation at source **S** of FET **110-4** when the FET is in its "on" state.

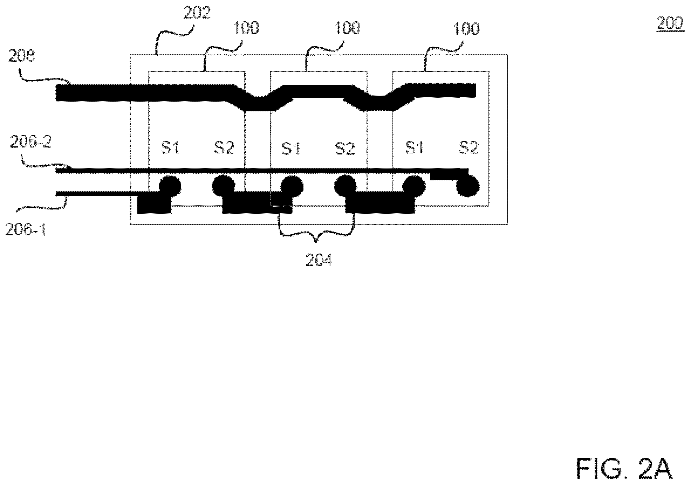

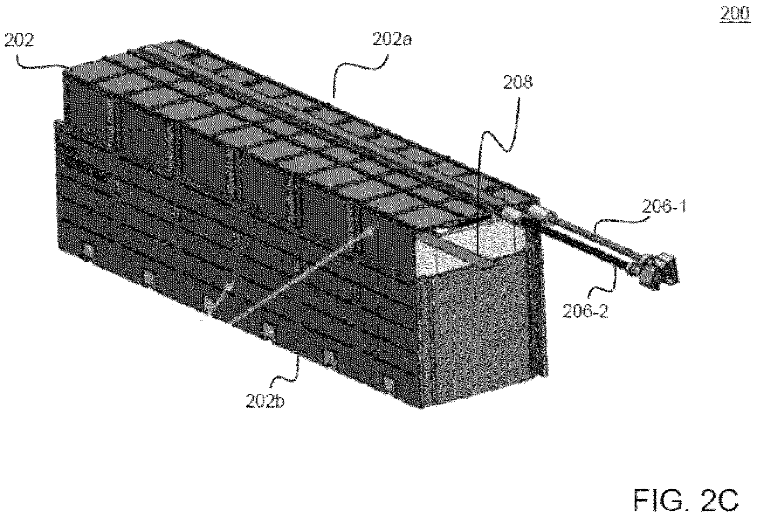

In those or other non-limiting embodiments or aspects, housing **202** may be configured to hold at least one (e.g., a plurality of, a set of, and/or the like) energy storage modules **100.** For example, as shown in FIG. 2A, housing **202** may be shaped to have three energy storage modules **100** uniformly distributed in an interior space defined by housing **202.** In some non-limiting embodiments or aspects, there may be any number of energy storage modules **100,** as described herein. For example, housing **202** may contain six energy storage modules **100,** nine energy storage modules **100,** twelve energy storage modules **100,** and/or the like.

In those or other non-limiting embodiments or aspects, bar connections **204** may connect energy storage modules **100** within housing **202.** For example, as shown in FIG. 2A, a first (e.g., left) bar connection **204** may connect second electrical connection **S2** of a first (e.g., left) energy storage module **100** to first electrical connection **S1** of a second (e.g., center) energy storage module **100,** and a second (e.g., right) bar connection **204** may connect second electrical connection **S2** of the second (e.g., center) energy storage module **100** to first electrical connection **S1** of a third (e.g., right) energy storage module **100.** As such, these energy storage modules **100** may be connected in series. In some non-limiting embodiments or aspects, energy storage modules 100 and/or bar connections **204** may be in other arrangements and/or have other connections (e.g., to connect energy storage modules **100** in series, in parallel, a combination of series and parallel connections, and/or the like, as described herein). In those or other non-limiting embodiments or aspects, bar connections **204** may include a conductive (e.g., electrically conductive) material, such as metal and/or the like. As it was discussed, previously, in some non-limiting embodiments or aspects, bar connections **204** may also be used for leading operationally generated heat away from the respective energy storage module(s) **100** (e.g., from circuit **120** of the corresponding energy storage module **100)** to which the respective bar connection **204** is connected.

In those or other non-limiting embodiments or aspects, electrical connections **206-1, 206-2** (collectively referred to as **"206")** may include a conductive (e.g., electrically conductive) material, such as metal and/or the like. For example, electrical connections **206** may include a wire, a cable, and/or the like. In those or other non-limiting embodiments or aspects, electrical connections **206** may allow for electrical connection between energy storage module container 200 (e.g., energy storage modules **100** within energy storage module container **200)** and external components (e.g., other components of the power supply system external to housing **202).**

In those or other non-limiting embodiments or aspects, first electrical connection **206-1** may be connected to first electrical connection **S1** of at least one energy storage module **100.** For example, first electrical connection **206-1** may be connected to first electrical connection **S1** of a first (e.g., left) energy storage module **100** (e.g., of a group of energy storage modules **100** connected in series). In those or other non-limiting embodiments or aspects, second electrical connection **206-2** may be connected to second electrical connection **S2** of at least one energy storage module **100.** For example, second electrical connection **206-2** may be connected to second electrical connection **S2** of a last (e.g., right) energy storage module **100** (e.g., of a group of energy storage modules **100** connected in series).

In those or other non-limiting embodiments or aspects, communication connection **208** may include at least one component that permits communication among other components. For example, communication connection **208** may include a bus connection (e.g., digital bus, such as controller area network bus (CAN-bus), isolated serial port Interface (isoSPI), any derivatives thereof, any combination thereof, and/or the like). In those or other non-limiting embodiments or aspects, communication connections **208** may allow for communicative connection between container energy storage modules **100** within energy storage module container **200** (e.g., module controllers **103** of such energy storage modules **100)** and external components (e.g., other components of the power supply system external to housing **202,** such as a system controller and/or the like). The system controller may provide a signal (e.g., command) via communication connection **208** to any of module controllers **103** for operating the switching elements **110** thereof (e.g., via one or more gate driver circuits) in a particular (e.g., controlled) manner.

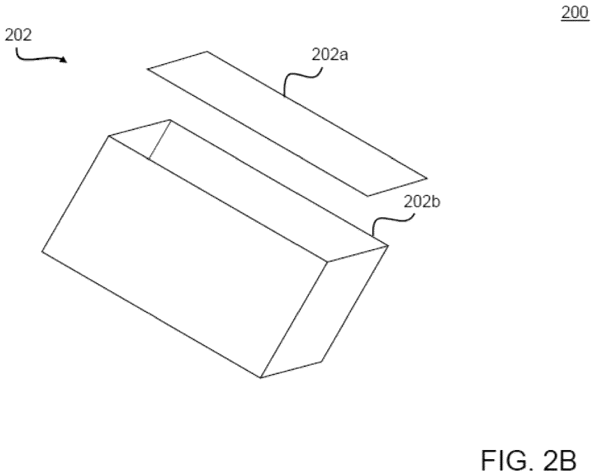

FIGS. 2B-2C provide schematic diagrams of an example energy storage module container 200 of energy storage modules, according to some non-limiting embodiments or aspects. As shown in FIGS. 2A-2C, energy storage module container **200** may include at least one energy storage module **100** (e.g., a plurality or energy storage modules **100,** a set of energy storage modules **100,** and/or the like of), housing **202** (e.g., including top cover **202a** and holder **202b),** bar connections **204,** first electrical connection **206-1** and second electrical connection **206-2** (collectively referred to as "electrical connections **206"** and individually referred to as "electrical connection **206"),** and/or communication connection **208.** The number and arrangement of components shown are provided as an example. In those or other non-limiting embodiments or aspects, energy storage module container **200** may include additional components, fewer components, different components, or differently arranged components than those shown. Additionally or alternatively, a set of components (e.g., one or more components) of energy storage module container **200** may perform one or more functions described as being performed by another set of components of energy storage module container **200.** In some non-limiting examples, energy storage module container **200** and/or housing **202** may be built from thermally conductive materials, e.g., to lead away operational heat generated in the energy storage modules **100.** Especially in combination with earlier discussed measures for heat transfer, this may also allow sealing the energy storage module container **200** and/or housing **202** such that they can result in a device which can be operated in presence of moisture and/or dust. Furthermore, requirement of active cooling may be avoided. Optionally, a thermally conductive coupling may be provided (e.g., air and/or fluid-based cooling) at one or more locations, e.g., circuit **120,** top cover **155,** bottom cover **157,** module housing **101,** power out interface **151,** bar **204,** housing **202,** and energy storage module container **200** for improving heat flow.

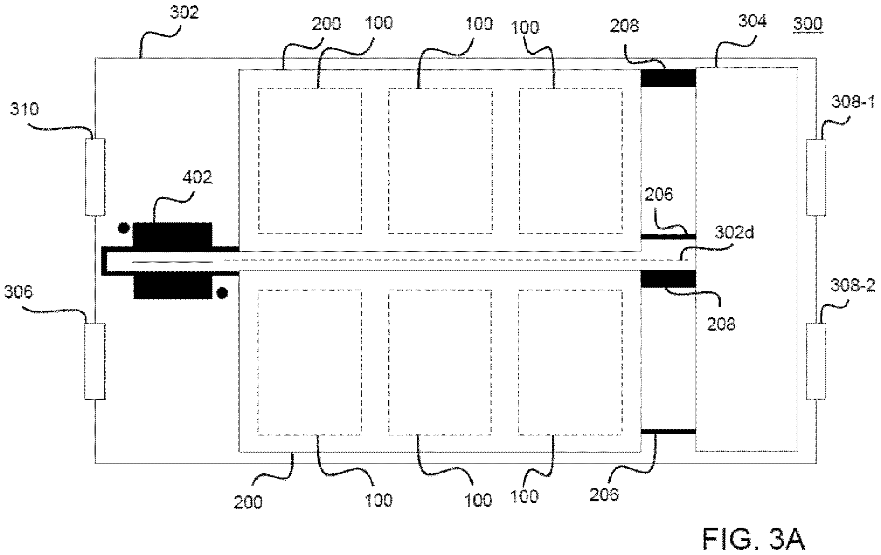

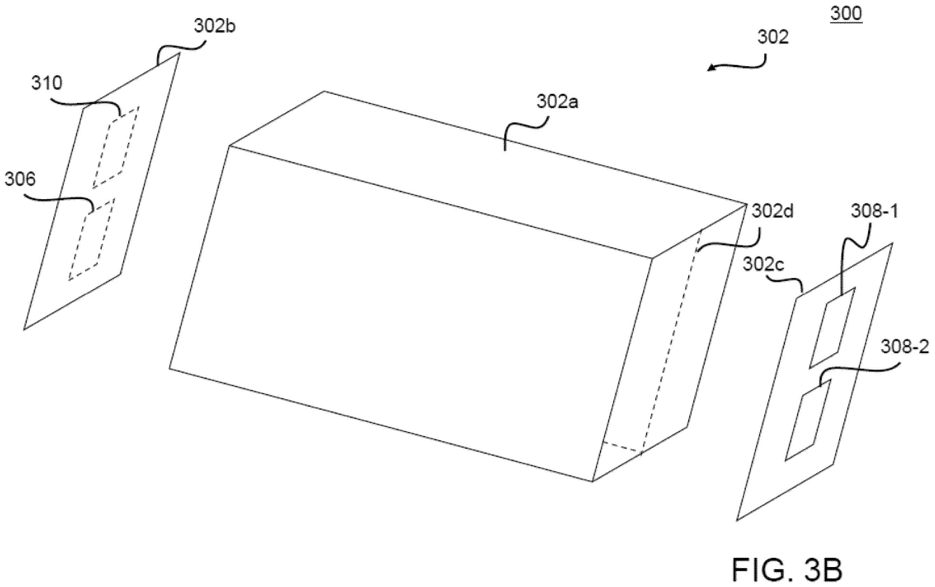

Referring now to FIGS. 3A and 3B, shown are schematic diagrams of an example electrical power system, shown here as a power supply system **300,** according to some non-limiting embodiments or aspects. As shown in FIGS. 3A and 3B, power supply system **300** may include at least one energy storage module container **200** (e.g., each including at least one energy storage module **100),** electrical connections **206,** communication connections **208,** housing **302,** system controller **304,** input connection **306,** at least one output connection (e.g., first output connection **308-1** and/or second output connection **308-2,** collectively referred to as "output connections **308,"** and individually referred to as "output connection **308"),** and/or choke **402.** In those or other non-limiting embodiments or aspects, power supply system **300** may also include communication connection **310.** For brevity and clarity, electrical connections **206** and communication connections **208** inside energy storage module container **200** are not shown in FIG. 3A, but energy storage module(s) **100** may be connected to electrical connections **206** and/or communication connections **208,** as described herein. For brevity and clarity, connections between energy storage module container **200** (and/or energy storage module(s) **100** thereof) and input connection **306,** output connection(s) **308,** and/or communication connection **310** are not shown in FIG. 3A, but energy storage module container **200** (and/or energy storage module(s) **100** thereof) may be connected to input connection **306,** output connection(s) **308,** and/or communication connection **310,** as described herein. For brevity and clarity, connections between system controller **304** and input connection **306,** output connection(s) **308,** and/or communication connection **310** are not shown in FIG. 3A, but system controller **304** may be connected to input connection **306,** output connection(s) **308,** and/or communication connection **310,** as described herein. The number and arrangement of components shown are provided as an example. In those or other non-limiting embodiments or aspects, power supply system **300** may include additional components, fewer components, different components, or differently arranged components than those shown. Additionally or alternatively, a set of components (e.g., one or more components) of power supply system **300** may perform one or more functions described as being performed by another set of components of power supply system **300.** For example, in those or other non-limiting embodiments or aspects, choke **402** may be included in and/or a part of system controller **304.**

In those or other non-limiting embodiments or aspects, housing **302** may include plastic, metal, any combination thereof, and/or the like. For example, housing **302** may include a metal housing, such as an aluminum housing. Similar to as was discussed before, in some non-limiting examples, there may be provided a thermal coupling between housing **202** and/or energy storage module container **200** and the housing **302** for improving heat transfer/dissipation.

In those or other non-limiting embodiments or aspects, housing **302** may be configured to hold at least one (e.g., a plurality of) energy storage module container(s) **200** and/or at least one (e.g., a plurality of) energy storage modules(s) **100.** For example, housing **302** may be configured to hold two energy storage module containers **200,** three energy storage module containers **200,** four energy storage module containers **200,** and/or the like. For the purpose of illustration, housing **302** may be configured to hold two energy storage module containers **200,** each of which may hold twelve energy storage modules(s) **100** (e.g., a total of 24 energy storage modules(s) **100).** For the purpose of illustration, housing **302** may be configured to hold three energy storage module containers **200,** each of which may hold eight energy storage modules(s) **100** (e.g., a total of 24 energy storage modules(s) **100).** Other non-limiting configurations are also possible, e.g., housing **302** may hold four energy storage module containers **200,** each of which may hold six energy storage modules(s) **100** (e.g., a total of 24 energy storage module(s) **100).** For the purpose of illustration, housing **302** may be configured to hold two energy storage containers **200,** each of which may hold three energy storage modules(s) **100** (e.g., a total of 6 energy storage modules(s) **100).** In those or other non-limiting embodiments or aspects, energy storage module container(s) **200** and/or energy storage module(s) **100** may be in other arrangements within housing **302.**

In those or other non-limiting embodiments or aspects, housing **302** may include a plurality of compartments separated by dividers **302d** (e.g., walls, barriers, and/or the like). For example, the number of compartments may be equal to the number of energy storage module container(s) **200** (e.g., a respective compartment for each respective energy storage module container **200).** Each compartment may be separated from the adjacent compartment(s) by a divider **302d**. For example, one divider **302d** may separate an interior space of housing **302** into two compartments, two dividers **302d** may separate an interior space of housing **302** into three compartments, and so on. In those or other non-limiting embodiments or aspects, divider **302d** may be part of housing **302** and/or may include the same material as housing **302** (e.g., aluminum, metal, plastic, and/or the like).

In those or other non-limiting embodiments or aspects, as shown in FIG. 3B, housing **302** may include body **302a,** first end cap **302b,** second end cap **302c,** and/or at least one divider **302d.** In those or other non-limiting embodiments or aspects, body **302a** and/or divider **302d** may include a first material (e.g., metal, such as aluminum), and first end cap **302b** and/or second end cap **302c** may include a second material (e.g., plastic). In those or other non-limiting embodiments or aspects, at least one of first end cap **302b** and/or second end cap **302c** may include the same material as body **302a** and/or divider **302d**. In those or other non-limiting embodiments or aspects, first end cap **302b** and second end cap **302c** may be configured to (e.g., sized and shaped to) cover openings at respective ends of body **302a**.

In those or other non-limiting embodiments or aspects, first end cap **302b** and/or second end cap **302c** may include (and/or may have a space to accommodate) input connection **306,** output connection(s) **308,** and/or communication connection **310.** For the purpose of illustration, as shown in FIG. 3B, input connection **306** and communication connection **310** may be located at first end cap **302b,** and output connections **308** may be located at second end cap **302c.** In those or other non-limiting embodiments or aspects, input connection **306,** output connection(s) **308,** and/or communication connection **310** may be in other arrangements. For example, all of input connection **306,** output connection(s) **308,** and communication connection **310** may be located at the same end cap (e.g., one of first end cap **302b** or second end cap **302c).** As another example, input connection **306** may be located at one end cap, and communication connection **310** and output connection(s) **308** may be located at the other end cap. As another example, input connection **306** and output connection(s) **308** may be located at one end cap, and communication connection **310** may be located at the other end cap. As another example, first output connection **308-1** may be located at one end cap, and second output connection **308-2** may be located at the other end cap.

In those or other non-limiting embodiments or aspects, system controller **304** may include a controller and associated circuitry. For example, system controller **304** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, system controller **304** may be communicatively connected to energy storage module container **200** and/or energy storage module(s) **100** (e.g., module controller(s) **103** thereof) by communication connection **208.** In those or other non-limiting embodiments or aspects, system controller **304** may be electrically connected to energy storage module container **200** and/or energy storage module(s) **100** (e.g., energy storage component(s) **102** thereof) by electrical connection(s) **206.** In some non-limiting embodiments or aspects, choke **402** may be included in and/or a part of system controller **304.**

In those or other non-limiting embodiments or aspects, input connection **306** may include at least one connector (e.g., at least one standardized electrical plug connector, e.g., for mains electric power and/or electrical devices compatible therewith). In those or other non-limiting embodiments or aspects, each output connection **308** may include at least one connector (e.g., at least one standardized electrical plug connector, e.g., for mains electric power and/or electrical devices compatible therewith). For example, first output connection **308-1** may include a connector (e.g., standardized electrical plug connector) suitable for 100-127 V (e.g., at a frequency of 60 Hz suitable for the United States of America, North America, etc.). For example, second output connection **308-2** may include a connector (e.g., standardized electrical plug connector) suitable for 200-240 V (e.g., at a frequency of 50 Hz suitable for the European Union, etc.). In those or other non-limiting embodiments or aspects, communication connection **310** may include at least one connector (e.g., at least one standardized communication plug connector). For example, communication connection **310** may include at least one of a universal serial bus (USB) connector (e.g., USB-A, USB-B, USB-C, USB power delivery (USB-PD), mini-USB, micro-USB, and/or the like), an ethernet connector, a coaxial cable connector, a pin connector, a CAN-bus connector, any combination thereof, and/or the like.

In those or other non-limiting embodiments or aspects, choke **402** may be electrically connected (e.g., coupled and/or the like) to energy storage module container(s) **200** and/or energy storage module(s) **100,** as described herein. For example, a first energy storage module container **200** and/or a first set of energy storage modules **100** may be connected to a first connection (e.g., first end, first winding, and/or the like) of choke **402,** as described herein. Additionally or alternatively, a second energy storage module container **200** and/or a second set of energy storage modules **100** may be connected to a second connection (e.g., second end, second winding, and/or the like) of choke **402,** as described herein.

In those or other non-limiting embodiments or aspects, system controller **304** may command module controller(s) **103** of energy storage module(s) **100** to generate an output voltage based on a combination (e.g., sum and/or the like) of the respective module voltage of each respective energy storage module **100,** as described herein. For example, by sequentially connecting multiple energy storage module(s) **100** in series in a time-shifted manner, a combined (e.g.,

summed) voltage may approximate an AC voltage waveform having a target amplitude (e.g., a voltage substantially equal to the nominal voltage of mains electric power, such as 100-127 V, 200-240 V, and/or the like) and/or a target frequency (e.g., a frequency substantially equal to the nominal frequency of mains electric power, such as 60 Hz, 50 Hz, and/or the like), as described herein.

In those or other non-limiting embodiments or aspects, system controller **304** may command module controller(s) **103** of energy storage module(s) **100** to cause a respective duty cycle of a respective module voltage of each respective energy storage module **100** to generate an output voltage based on a combination (e.g., sum and/or the like) of the respective module voltage of each respective energy storage module **100,** as described herein. For example, by modulating the duty cycle differently for multiple energy storage module(s) **100** connected in series, a combined (e.g., summed) voltage may approximate (e.g., better approximate) an AC voltage waveform having a target amplitude and/or a target frequency, as described herein. In those or other non-limiting embodiments or aspects, the duty cycle of the respective module voltage may relate to a switched voltage scheme such as a pulse-width modulation (PWM) type waveform. For example, system controller **304** may command module controller(s) **103** of energy storage modules **100** to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system may be between 40 kHz and 100 kHz. In some cases, the switching frequency and/or PWM frequency of the system may be at or around 90 kHz. In those or other non-limiting embodiments or aspects, module output may be switching (e.g., PWM) at a frequency between 1.5 kHz to 7.5 kHz. For example, module output may be switching (e.g., PWM) at a frequency between 3.5 kHz to 4.5 kHz. As a further example, module output may be switching (e.g., PWM) at a frequency at or around 3.75 kHz. As another example, module output may be switching (e.g., PWM) at a frequency at or around 4 kHz. In some non-limiting embodiments or aspects, the switching frequency or PWM frequency of the system may be proportional to a multiplication of the switching frequency and/or PWM frequency of the energy storage module **100** and the number of energy storage modules **100**. It shall be appreciated that duty cycle may be anywhere between 0% and 100%, e.g., depending on the time at which the respective energy storage modules **100** are being operated. For example, 0% duty cycle for a given energy storage module **100** may mean that the energy storage module **100** is instructed to be deactivated or in a bypass mode (energy storage module **100** not contributing to the output voltage, but still able to carry current), and 100% duty cycle may mean that that energy storage module **100** is instructed to be switched on or activated in a given polarity. For example, by sweeping the duty cycle of a given energy storage module **100** over time (e.g., between 0% and 100%), the effective output voltage of that energy storage module **100** can be more finely incremented or decremented between voltage steps associated with full switching between two consecutive energy storage modules **100**. Various energy storage modules **100** may be orchestrated, e.g., by system controller **304,** to generate an output voltage based on a combination of the respective module voltage of each respective energy storage module **100,** as described herein.

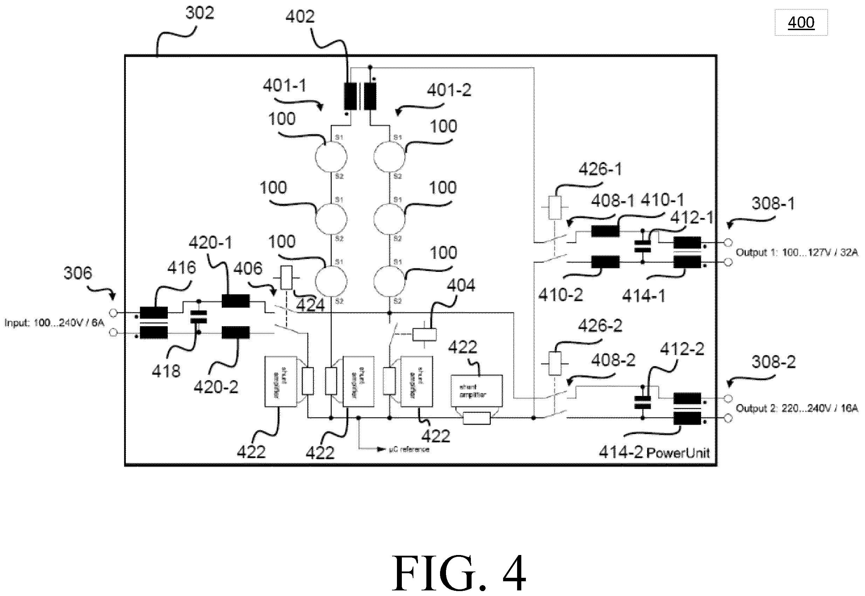

Referring now to FIG. 4, shown is a circuit diagram of an example electrical system, for example, a power delivery system such as a power supply system **400,** according to some non-limiting embodiments or aspects. In some non-limiting embodiments or aspects, power supply system **400** may be the same as or similar to electrical system **300**. The number and arrangement of components shown are provided as an example. In those or other non-limiting embodiments or aspects, power supply system **400** may include additional components, fewer components, different components, or differently arranged components than those shown. Additionally or alternatively, a set of components (e.g., one or more components) of power supply system **400** may perform one or more functions described as being performed by another set of components of power supply system **400.**

In those or other non-limiting embodiments or aspects, as shown in FIG. 4, input connection **306** may be connected to input choke **416**. Input choke **416** may be connected to input capacitor **418** and/or at least one input inductor (e.g., first input inductor **420-1** and/or second input inductor **420-2,** collectively referred to as "input inductors **420,"** and individually referred to as "input inductor **420"**). For example, input choke **416** may be provided for electromagnetic compatibility (EMC) reasons. Similarly, input capacitor **418** may be provided as an EMC capacitor (and/or class-X capacitor), which may stabilize the input voltage and/or make the input less impedant at higher frequencies. For example, input inductor(s) **420** may be used to operate the power supply system **400** in a controlled current mode.

In those or other non-limiting embodiments or aspects, first output connection **308-1** may be connected to first output choke **414-1**. First output choke **414-1** may be connected to at least one of capacitor **412-1** and/or inductors **410**.

In those or other non-limiting embodiments or aspects, second output connection **308-2** may be connected to second output choke **414-2**. Second output choke **414-2** may be connected to capacitor **412-2**.

In those or other non-limiting embodiments or aspects, each of the chokes (e.g., input choke **416,** first output choke **414-1,** and/or second output choke **414-2)** may be common-mode chokes and/or the like, e.g., used for EMC performance. It shall be appreciated that further discussion of EMC inductors or capacitors is not essential to the scope or generality of the present teachings.

In those or other non-limiting embodiments or aspects, input switch **424** may selectively connect and/or disconnect input **406** from first set **401-1** and second set **401-2** of energy storage modules **100**. In those or other non-limiting embodiments or aspects, to operate in a third mode of operation (e.g., a charging mode of operation) input switch **424** at input **406** may be switched to a first state (e.g., closed, activated, and/or the like). For example, switching input switch **424** to the first state (e.g., closed, activated, and/or the like) may allow current to flow from input connection **306** through input **406** to first set **401-1** and second set **401-2** of energy storage modules **100** (e.g., to charge energy storage modules **100**). In those or other non-limiting embodiments or aspects, a power source (e.g., mains electric power, generator power, renewable power (e.g., solar, wind, and/or the like), and/or the like) may be connected to input connection **306**. In those or other non-limiting embodiments or aspects, system controller **304** may control module controllers of energy storage modules **100** to charge energy storage components **102** thereof (e.g., based on power from the power source).

In those or other non-limiting embodiments or aspects, to discontinue the third mode of operation (e.g., stop charging) and/or to prevent current from flowing to input connection **306** when power supply system **400** is not in the third (e.g., charging) mode of operation, input switch **424** at input **406** may be switched to a second state (e.g., open, deactivated, and/or the like).

In those or other non-limiting embodiments or aspects, at least one output switching element (e.g., first output switch **426-1** and/or second output switch **426-2**, collectively referred to as "output switches **426**," and individually referred to as "output switch **426**") may selectively connect and/or disconnect outputs **408** from first set **401-1** and second set **401-2** of energy storage modules **100**.

In those or other non-limiting embodiments or aspects, to operate in the first mode of operation, in addition to switching of switch **404** to a first state (e.g., closed, activated and/or the like), first output switch **426-1** may be switched to a first state (e.g., closed, activated and/or the like). For example, this may allow current to flow from first set **401-1** and second set **401-2** of energy storage modules **100** through first output **408-1** (and inductors **410** and/or capacitor **412-1**) to first output connection **308-1** (e.g., to supply power to a load connected to first output connection **308-1**). In those or other non-limiting embodiments or aspects, to prevent current from flowing to first output connection **308-1** when power supply system **400** is not in the first mode of operation, first output switch **426-1** may be switched to a second state (e.g., opened, deactivated and/or the like).

In those or other non-limiting embodiments or aspects, to operate in the second mode of operation, in addition to switching of switch **404** to a second state (e.g., opened, deactivated and/or the like), second output switch **426-2** may be switched to a first state (e.g., closed, activated and/or the like). For example, this may allow current to flow from first set **401-1** and second set **401-2** of energy storage modules **100** through second output **408-2** (and capacitor **412-2**) to second output connection **308-2** (e.g., to supply power to a load connected to second output connection **308-2**). In those or other non-limiting embodiments or aspects, to prevent current from flowing to second output connection **308-2** when power supply system **400** is not in the second mode of operation, second output switch **426-2** may be switched to a second state (e.g., opened, deactivated and/or the like).

In those or other non-limiting embodiments, the first mode of operation and the second mode of operation may be used to provide multi-voltage operation via the power supply system **400**. For example, in the first mode of operation, the first set **401-1** and second set **401-2** of energy storage modules **100** may be connected in parallel, while in the second mode of operation, the first set **401-1** and second set **401-2** of energy storage modules **100** may be connected in series. It shall be appreciated that the first mode of operation may provide an output voltage which is lower than the output voltage provided in the second mode of operation. However, the output current provided in the first mode of operation may be larger than the output current provided in the second mode of operation. For example, the first mode of operation may provide a 110 V output, while the second mode of operation provides a 220 V output. This can advantageously allow the power supply system **400** for multi-voltage domain operation. For example, 110 V AC mains voltage domain is predominantly used in the US, while 220 V AC mains voltage domain is used in Europe. The power supply system **400** can thus allow flexibility in using electrical appliances rated for any of the voltage domains. A particular advantage of the shown configuration can be that output power can be similar or identical in either mode. For example, assuming identical sets **(401-1** and **401-2)** operating identically, output current in the first mode can be double of the output current in the second mode even though the output voltage in the first mode is half of the output voltage in the second mode. This can allow similar power levels to be used despite the voltage domain which the power supply system **400** output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power supply system **400**.

In those or other non-limiting embodiments or aspects, each of input switch **424** and output switches **426** may include at least one of a switch, a contactor, a transistor, any combination thereof, and/or the like. For example, each of input switch **424** and output switches **426** may include at least one of an SPST switch, a DPDT switch, an SPDT switch, a DPST switch, any combination thereof, and/or the like. For example, each of the input switch **424** and output switches **426** may include at least one of a DPDT switch or a DPST switch. For the purpose of illustration, as shown in FIG. 4, each of the input switch **424** and output switches **426** may include a DPST switch or a DPDT switch.

In those or other non-limiting embodiments or aspects, power supply system **400** may include current sensors **422,** which may be in communication with system controller **304** (e.g., a microcontroller). In those or other non-limiting embodiments or aspects, each current sensor **422** may include a shunt amplifier. For example, each shunt amplifier may refer to a common potential (e.g., reference voltage), to which system controller **304** (e.g., a microcontroller) also may refer. In those or other non-limiting embodiments or aspects, at least some (e.g., all, a subset, and/or the like) of current sensors **422** may be any other suitable type of current sensor. For example, a current sensor **422** may include measuring voltage drop across a resistor connected in series (e.g., to at least one of first set **401-1** and/or second set **401-2** of energy storage modules **100),** e.g., to measure the current flowing through the resistor (and/or any component in series with the resistor). In those or other non-limiting embodiments or aspects, at least one current sensor **422** may be of a different type than another current sensor **422.** For example, a current sensor **422** connected to of first set **401-1** of energy storage modules **100** may be of a different type than another current sensor **422** connected to second set **401-2** of energy storage modules **100.**

In those or other non-limiting embodiments or aspects, by measuring current at locations of current sensors **422,** the following may be measured (e.g., by system controller **304** and/or the like): output current (e.g., in a redundant manner), input current (e.g., in a redundant manner), circular current (e.g., if strings are connected in parallel). In some non-limiting embodiments or aspects, current sensors may measure current flowing through each of first set **401-1** and second set **401-2** of energy storage modules **100.** As such, relative measurements may be performed to detect if a circular (e.g., loop) current is flowing between first set **401-1** and second set **401-2** of energy storage modules **100.** In other words, such relative measurements may be used to detect that the load current is divided evenly between the sets. Such measurements also may be used for orchestrating the operation of energy storage modules **100,** e.g., in such a manner that the circular (e.g., loop) current may be reduced (e.g., eliminated). Additionally or alternatively, such orchestration may also include disabling certain energy storage modules **100** in any of sets **401,** even if such disabling causes an unequal number of active energy storage modules **100** between the sets **401.** This may help running the power supply system **400,** for example, even if energy storage modules **100** between sets **401** have different charge levels. Additionally or alternatively, such orchestration may include first module voltages of first set **401-1** being interleaved with second module voltages of second set **401-2.** Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set **401-1** and the second set **401-2.** This may result in the loop current which tends to flow from one set **401** to the other set **401** to be a low frequency current which can be used, e.g., to equalize state of charge between the two sets **401.** Choke **402,** even in such non-limiting embodiments or aspects, may block the high frequency currents, but may allow low frequency or DC current to flow from the set **401** having a higher voltage than the other set **401.** As such, power supply system **400** may be more robust, flexible, and balanced. In some non-limiting embodiments or aspects, current sensors **422** may be leveraged for making absolute measurements, such as determining total current flowing through first set **401-1** and/or second set **401-2** of energy storage modules **100.** It shall be appreciated that said imbalance may be caused by unequal number of energy storage modules **100** operating in one set **401** as compared to the number of energy storage modules **100** operating in the other set **401.** Additionally or alternatively, the imbalance may be due to unequal charge level between the two sets **401.** Similarly, the power supply system **400** may also include circuit for voltage measurement in one or more networks of the power supply system **400.** It is neither essential nor limiting to the present disclosure to specify which voltage measurement circuit or scheme must be used.

As discussed above, the energy storage module **100** has an AC input **290** for charging the internal electrical energy storage cells (e.g., storage components **102).** Charging is done in a controlled current mode. In this regard, the energy storage module **100** comprises control circuitry and filter components to operate at a desired current waveform. The energy storage module **100** is designed to quickly charge the electrical energy storage cells **102** without overheating.

For the energy modules, there may be two modes of operation, namely a first mode and a second mode. The energy modules are deactivated in the first mode which results in a lowest self-consumption. The energy modules are activated in the second mode which results in significant self-consumption. The transistor active bridge circuit **144** operates in accordance with commands from the system controller **304.**

In one implementation, the energy modules are always kept in the second mode during charging, but the root mean square (RMS) value of charging current may vary between two values (e.g., 0 Amps and 4 Amps). So, there are two states for current control. A first state exists when the temperature of an energy module reaches a first threshold and current is set to a first value (e.g., zero amps). The energy module cools down in the first state. A second state exists when the temperature of the energy module falls below a second threshold (which is below the first threshold) and current is set to a higher second value (e.g., four amps).

In the first state there are two main sources of heat: data processing circuit **132** and transistor active bridge circuit **144.** The losses are constant and irrelevant of the current. The following additional sources of heat are added when the energy module is operating in the second state: electrical energy storage components **102** and other resistive components (e.g., traces and connectors). This results in (i) ohmic loss in the electrical energy storage components **102** plus the other resistive components and (ii) ohmic loss plus switching loss in the power stage. The ohmic losses have a quadratic dependence of the current. Switching loss tends to be roughly linear.

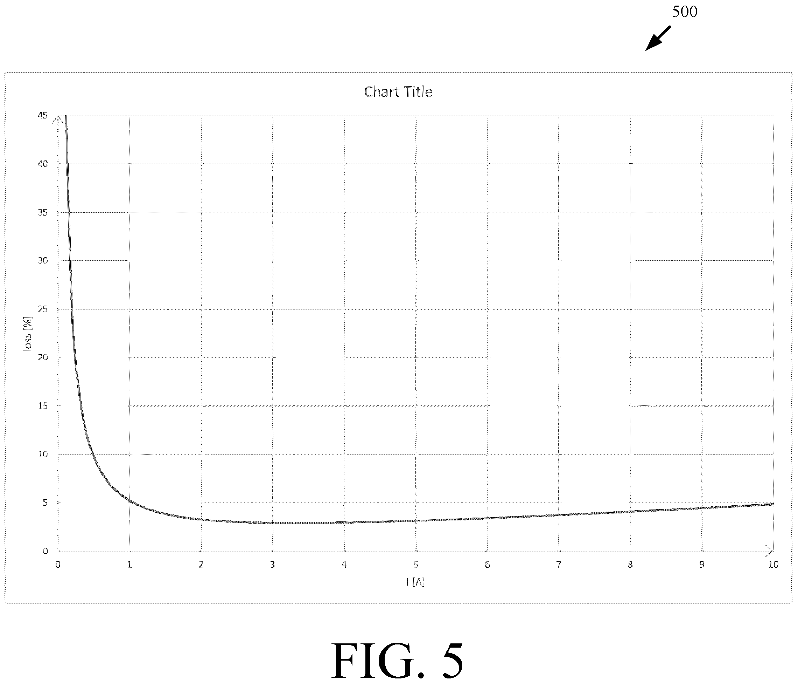

Ignoring the switching loss and with example values of eleven watts constant losses, 1 R ohmic resistance for the complete system and 3.6 V cell voltage, the percentual loss depending on the current results in the values plotted on graph **500** of FIG. 5.

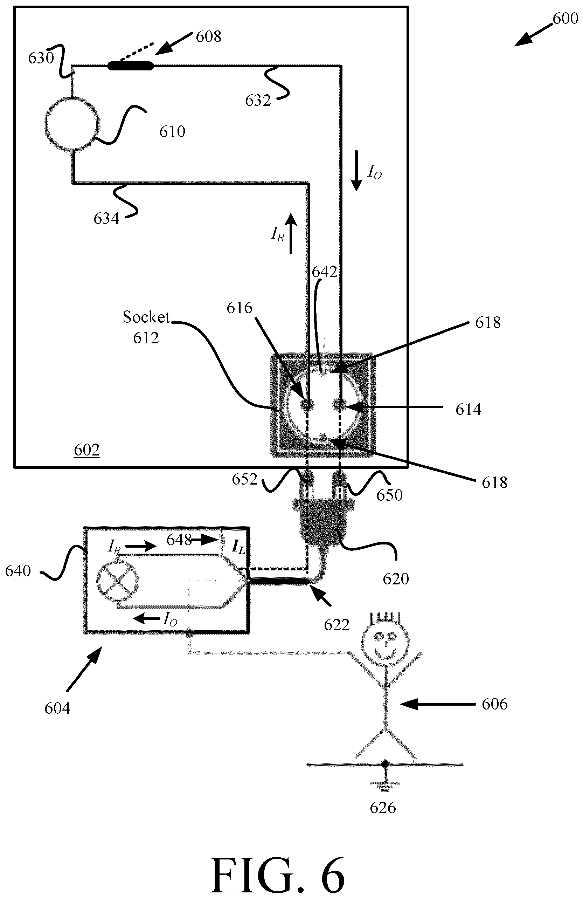

FIG. 6 provides an illustration of a system **600** including a power supply **602** to which an external device **604** (e.g., an electric or electronic device) can be electrically connected. The device **604** may be connected via any connecting means such as a plug **620** and socket **612** arrangement. Power supply **602** can include, but is not limited to, the energy storage module(s) discussed above in relation to FIGS. 1-5. For example, power supply **602** may be the same as or similar to energy module **100** of FIG. 1 or a system comprising several energy modules **100.** For example, power supply **602** may be the same or similar to electrical system **300,** or electrical system **400.**

Power supply **602** shown in this example comprises a power source **610,** a circuit breaker **608,** and the socket **612.** Socket **612** comprises an active conductor **614,** a neutral conductor **616** and a protected earth (PE) conductor **618.** In certain cases, for example, when the power supply **602** is an isolated unit or system, the earth conductor **618** may be unused (e.g., not connected to earth **626**) such that the supply **602** is unearthed. For isolated systems (e.g., those not connected to earth **626**), PE conductor **618** may be called "potential equalizing" conductor. As shown in the example of FIG. 6, the PE conductor **618** is not connected to the internal components of the supply **602.** However, it is shown that the housing **640** of the device **604** is connected to potential equalizing) terminal **642** of the plug **620.** The active conductor **614** is electrically connected to a power source **610** via lines **630, 632** and circuit breaker **608.** The active conductor **614** comprises a line or phase wire capable of carrying a voltage (as non-limiting examples, 50 volts ("V"), 90 V, 110 V, 220 V, or any standard or non-standard mains voltage) (e.g., relative to ground) when the power supply **602** is turned on. The neutral conductor **616** comprises a wire that receives and returns alternating current to the supply during normal operation. In some electrical systems, neutral conductor is connected to ground. It shall be appreciated that the so-called "ground" mentioned here may not necessarily be referenced to earth **626.** For example, for an isolated system (as shown in FIG. 6), it may be the lowest voltage level (e.g., negative pole, e.g., **634**) of the power source **610.** It shall also be appreciated that the power source **610** may be an alternating current ("AC") source or it may be a direct current ("DC") source. Accordingly, in some cases, without limitation, the active conductor may be called a positive conductor, and the neutral conductor may be called a negative conductor. It shall be appreciated that normally the circuit breaker **608** is provided in series with the active conductor **614** (as shown here) for bringing the supply **602** and/or connected device **604** to a safe state manually and/or automatically. For example, the safe state may be when the power source **610** is electrically disconnected from the socket **612** such that flow of current between the source **610** and any load (e.g., **604**) connected at the socket **612** is prevented. In some non-limiting examples, the breaker **608** may automatically trigger in response to detection of a fault condition, e.g., an overcurrent condition. The power source **610** may be the same as or similar to energy module **100** of FIG. 1. For example, the power source **610** may comprise a plurality of energy modules **100.** For example, power source **610** may be the same or similar to electrical system **300,** or electrical system **400.** Although AC currents are discussed herein, it shall be appreciated that the present teachings can apply equally to direct current (DC) operation as well. In some non-limiting examples, the power source **610** may be generator of any type, for example a fuel-cell based source, or a fuel powered electrical generator.

In this example, the neutral conductor **616** is electrically connected to the power source **610** via line **634.** Line(s) **630-634** can include wire(s) and/or cable(s). As mentioned previously, in some non-limiting examples, the PE conductor **618** may only be connected at the socket **612** (e.g., unconnected with the earth **626**), or in some cases where the supply **602** comprises multiple sockets, it may be connected to those sockets as well.

The circuit breaker **608** is in a closed state (e.g., in ON state, or conducting state) during normal operation (as shown in FIG. 6) such that a closed-circuit condition is provided between the power source **610** and active conductor **614.** Thus, when power is being supplied to the external electronic device **604** and no operational fault (e.g., overcurrent fault) exists, current $I_O$ provided (e.g., generated) by the power source **610** flows through line **630,** circuit breaker **608,** and line **632** to the active conductor **614** of socket **612.** The current $I_O$ continues to flow from active conductor **614** to the external device **604** via the plug's pin **650** and cable **622.** A return current $I_R$ flows from the device **604** through the plug's pin **652** to the neutral conductor **616** of socket **612.** The return current $I_R$ continues to flow from the neutral conductor **616** over line **634** to power source **610.** It shall be appreciated that the directions of the currents are merely shown in the herein included figures for the ease of understanding and without limitation. It is known to those with normal skill in the art that while DC current flows in one direction, AC current changes direction of flow during operation. The currents $I_O$ and $I_R$ as shown drawn in FIG. 6 may thus represent instantaneous or momentary currents at certain time of operation of the power supply **602.** Thus, e.g., without limitation, the directions of the currents (e.g., $I_O$ and $I_R$) may be opposite of those shown in FIG. 6 at other times. However, during normal operation of the power supply **602,** the magnitude of currents $I_O$ and $I_R$ would be equal while the direction of their flow (e.g., w.r.t the power source **610** and/or load **604**) would be opposite to each other (e.g., directions of these as shown in FIG. 6).

In some scenarios, in electrical devices, there may occur a leakage fault (e.g., an insulation fault caused by insulation failure in the device **604**) that creates an unintended leakage circuit between live line and the housing **640**. For earthed systems, (e.g., those devices in which PE connection exists to earth **626**) the unintended leakage circuit may cause a leakage current $I_L$ to flow via the housing **640** of device **604** as shown by dotted line **648** when there is further a current flow path between the housing **640** and a different potential (e.g., earth **626**). The housing **640** of the device **604** is connected to the PE conductor **618** of socket **612**. For a floating system such as that shown in FIG. 6, since the PE conductor **618** of socket **612** is not connected to earth **626** (e.g., the supply **602** is an isolated unit), a return path for the leakage current $I_L$ to flow is not provided. If the circuit breaker **608** is sensitive to detecting the leakage current $I_L$, it will not transition from its closed position to its open position as there is no current flowing through the PE conductor **618** since it is not connected to earth. Nevertheless, in effect, the user **606** is protected from electrical shock when in contact with the housing **640** in such a case since the leakage current $I_L$ would not flow through the user **606** due to the floating PE conductor **618**. The user **606** is protected because of the source **610** is not referenced to earth **626**. The circuit breaker **608** is thus ineffective in detecting in this kind of fault.

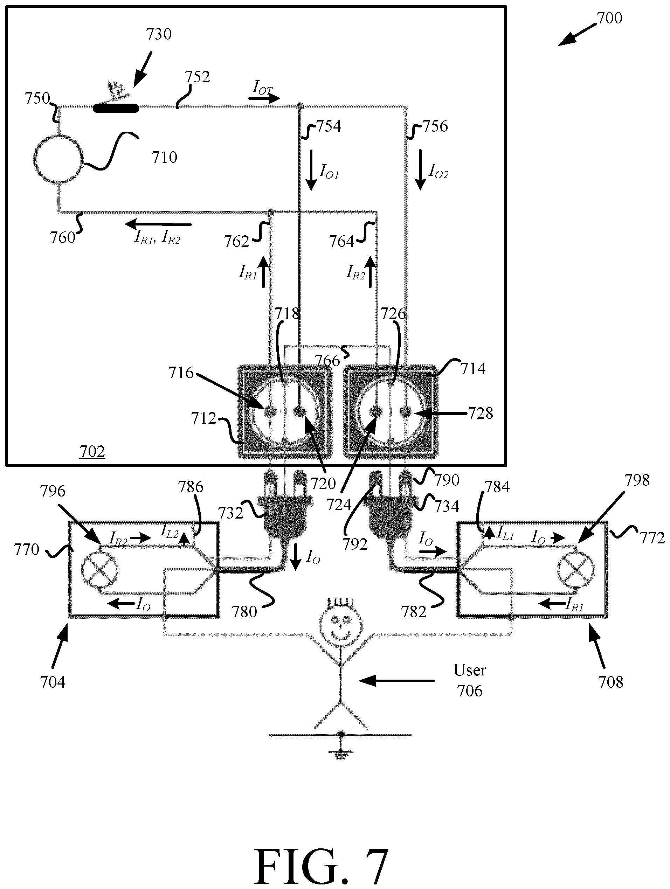

FIG. 7 provides an illustration of a system **700** in which more than one external device **704, 708** is connected to the power supply **702** (e.g., for receiving power from the supply **702**). Power supply **702** can include, but is not limited to, the energy storage module(s) discussed above in relation to FIGS. 1-5. For example, power supply **702** may be the same as or similar to energy storage module **100** of FIG. 1. For example, power supply **702** may be similar to power supply **602** shown in FIG. 6, but with two- instead of one connecting means (e.g., sockets **712** and **714** instead of **612**).

Power supply **702** comprises a power source **710** (e.g., the same as, or similar to power source **610** of FIG. 6), a circuit breaker **730**, and sockets **712, 714**. Socket **712** comprises a neutral conductor **716**, an active conductor **720** and PE conductor **718**. The active conductor **720** is electrically connected to the power source **710** via lines **750, 752, 754** and circuit breaker **730**. The active conductor **720** comprises a line or phase wire capable of carrying a voltage (e.g., as non-limiting examples, 50 volts ("V"), 90 V, 110 V, 220 V or any standard or non-standard DC or AC voltage, e.g., mains voltage) (e.g., relative to ground) when the power supply **702** is turned on. The neutral conductor **716** is electrically connected to a power source **710** via lines **760, 762**. The neutral conductor **616** comprises a wire that comprises a wire that may carry voltage of the negative pole of the power source **710**, e.g., zero volts relative to ground. It receives and returns alternating current to the source **710** during normal operation. As discussed in context of FIG. 1, the so-called "ground" mentioned here may not necessarily be referenced to earth. Lines **750-754, 760, 762** can include wire(s) and/or cable(s).

Socket **714** comprises a neutral conductor **724**, an active conductor **728** and PE conductor **726**. The active conductor **728** is electrically connected to the power source **710** via lines **750, 752, 756** and circuit breaker **730**. The active conductor **728** comprises a line or phase wire capable of carrying a voltage (e.g., (as non-limiting examples, 50 volts ("V"), 90 V, 110 V, 220 V or any standard or non-standard DC or AC voltage, e.g., mains voltage) (e.g., relative to ground) when the power supply **702** is turned on. The neutral conductor **724** is electrically connected to power source **710** via lines **760, 764**. The neutral conductor **724** comprises a wire that may carry voltage of the negative pole of the power source **710**, e.g., zero volts relative to ground. The neutral conductor **724** of socket **714** is connected to the neutral conductor **718** of socket **712** via line **766**. PE conductors **718** and **726** of sockets **712** and **714** respectively are connected via line **766**. At least in cases such as when the power supply **702** is enclosed in a conductive (e.g., metal) housing, the conductive connection (e.g., **766**) between PE conductors of sockets of the supply **702** may be required by certain electrical standards. Lines **756, 764, 766** can include wire(s) and/or cable(s). Socket **714** may or may not be similar to socket **712** in terms of type of connections and functionality.

The circuit breaker **730** is normally in a closed state (as shown in FIG. 7) such that a closed circuit condition is provided between the power source **710** and active conductors **720, 728** of sockets **712, 714**. Circuit breaker **730** may be similar to circuit breaker **608**. Thus, when power is being supplied to the external devices **704, 708** and no fault (e.g., overcurrent fault) exists, current $I_{OT}$ provided (e.g., generated) by the power source **710** flows through line **750**, circuit breaker **730**, and line **752**. In normal operation, current $I_{OT}$ may be defined by the following mathematical equation.

$$I_{OT} = I_{O1} + I_{O2,}$$

where $I_{O1}$ represents the outgoing current (e.g., flowing from the source **710**) that flows on line **754** to the active conductor **720** of socket **712**, and $I_{O2}$ represents the outgoing current (e.g., flowing from the source **710**) that flows on line **756** to the active conductor **728** of socket **714**. It shall again be appreciated that the specific directions of the currents are merely referred to for brevity and ease of understanding and thus without limitation. Particularly AC currents will change direction of flow regularly. Hence, the terms such as "outgoing", "forward", "return", etc. when referring to such currents should not be construed in a manner which is limiting to the generality or scope of the present teachings.

Current $I_{O1}$ continues via flow to active conductor **720** of socket **712** via line **754**. E.g., current $I_{O1}$ continues to flow from active conductor **720** to external device **704** via plug **732** and cable **780**. A return current $I_{R1}$ may flow from the device **704** through the cable **780** and the plug **732** to the neutral conductor **716** of socket **712**. The return current $I_{R1}$ may continue to flow on lines **762, 760** to power source **710.**

Current $I_{O2}$ continues to flow through pin **790** of plug **734** and cable **782** to the external device **708.** A return current $I_{R2}$ flows from the device **708** through the cable **782** and the plug's pin **792** to the neutral conductor **724** of socket **714.** The return current $I_{R2}$ continues to flow on lines **764, 760** to power source **710.** As mentioned in context of FIG. 1, the directions of the currents are merely shown as "forward" or "return" for the ease of understanding and without limitation. It shall be appreciated that while DC current flows in one direction, AC current changes direction of flow during operation, hence the directions of the currents may be opposite of what is shown.

In some scenarios, there may occur a leakage fault (e.g., insulation faults caused by insulation failure in both devices **704, 708)** that creates an unintended leakage circuit, e.g., between live line and the housing of the respective device **704** and **708.** In certain cases, (e.g., for an earthed system), the unintended leakage circuit may cause leakage currents $I_{L1}, I_{L2}$ to flow via the housings **770, 772** of devices **704, 708** as shown by dotted lines **784, 786** when there is further a current flow path between the respective housing **770, 772** and a different potential. In this example, the insulation fault of device **704** is on the output line **796** connected to the neutral conductor **716** of socket **712,** while the insulation fault of device **708** is on the input line **798** connected to the active conductor **728** of socket **714.** Thus, the insulation faults are on opposite types of socket conductors (or on conductors carrying different polarity). Thus, an effective short-circuit of both conductors is created via line **766.** Even though the user **706** is also in electrical contact with these leaky conductors (by touching the housings **770** and **772),** the majority (e.g., nearly all) leakage current would flow via the lower impedance path of line **766,** rather than via the user's body. Thus, even in cases where user **706** contacts both housings **770** and **772** concurrently, the path of lower impedance would be through line **766.** Therefore, the user **706** is protected from a high current flowing through their body. Moreover, due to non-zero internal impedance of the source **710** and/or impedance of the circuit (e.g., of lines **752, 760, 754, 756, 762, 764, 780, 782,** paths **784** and **782,** etc.) will further cause voltage difference between housings **770** and **772** to drop to a low value due to low impedance of line **766.** Dependent upon the impedance of the leakage circuit, the leakage current (especially flowing via line **766)** might be very large such that it in this case that causes the circuit breaker **730** to transition from its closed state to its open state (e.g., due to overcurrent protection), whereby the user **706** is also isolated from power source **710.**

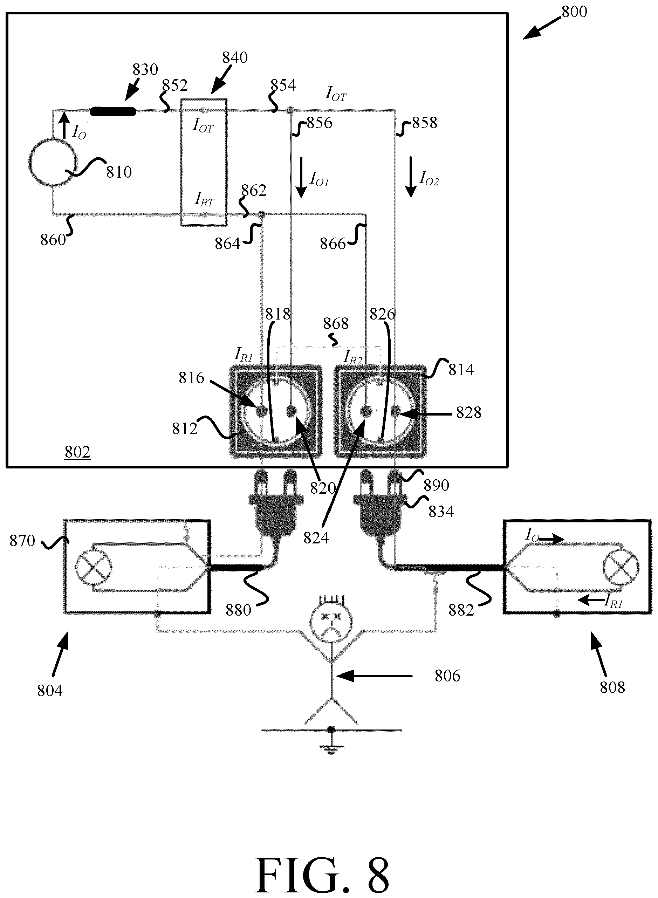

FIG. 8 provides an illustration of a system **800** in which more than one external device **804, 808** is connected to the power supply **802** (e.g., for receiving power from supply **802).** It shall be appreciated that the system **800** is similar to the system **700** shown in FIG. 7 except that a current sensing device **840** is shown provided. Furthermore, the fault mode shown in FIG. 8 is different from that shown in FIG. 7. Power supply **802** can include, but is not limited to, the energy storage module(s) discussed above in relation to FIGS. 1-5. For example, power supply **802** may be the same as or similar to energy storage module **100** of FIG. 1, or as discussed in previous figures. For example, power supply **802** may be the same or similar to power supply **702** shown in FIG. 7.

Power supply **802** comprises a power source **810** (e.g., the same as or similar to power source **710** of FIG. 7), a circuit breaker **830,** a current sensing device (as a non-limiting example, a residual current device ("RCD")) **840,** and connecting means (e.g., sockets or receptacles of similar or dissimilar types) **812, 814.** Socket **812** comprises a neutral conductor **816,** an active conductor **820** and PE conductor **818.** The active conductor **820** is electrically connected to the power source **810** via lines **854, 856,** circuit breaker **830** and current monitoring device or RCD **840.** The active conductor **820** comprises a line or phase wire capable of carrying a voltage (e.g., as non-limiting examples, 50 volts ("V"), 90 V, 110 V, 220 V or any standard or non-standard DC or AC voltage, e.g., mains voltage) (e.g., relative to ground) when the power supply **802** is turned on. The neutral conductor **816** is electrically connected to a power source **810** via lines **860, 862, 864** and RCD **840.** The neutral conductor **816** comprises a wire that may carry voltage of the negative pole of the power source **810,** e.g., zero volts relative to ground. It receives and returns alternating current to the source **810** during normal operation. As discussed in context of FIG. 1, the so-called "ground" mentioned here may not necessarily be referenced to earth. Lines **852-856, 860-864** can include wire(s) and/or cable(s).

Socket **814** comprises a neutral conductor **824,** an active conductor **828** and PE conductor **826.** The active conductor **828** is electrically connected to the power source **810** via lines **854, 858,** circuit breaker **830** and RCD **840.** The active conductor **828** comprises a line or phase wire capable of carrying a voltage (e.g., as non-limiting examples, 50 volts ("V"), 90 V, 110 V, 220 V or any standard or non-standard DC or AC voltage, e.g., mains voltage) (e.g., relative to ground) when the power supply **802** is turned on. The neutral conductor **824** is electrically connected to a power source **810** via lines **860, 862, 866** and RCD **840.** The neutral conductor **824** comprises a wire that may carry voltage of the negative pole of the power source **810,** e.g., zero volts relative to ground. It receives and returns alternating current to the source **810** during normal operation. The neutral conductor **824** of socket **814** is connected to the neutral conductor **816** of socket **812.** Lines **858, 866, 868** can include wire(s) and/or cable(s). PE conductors **818** and **826** of sockets **812** and **814** respectively may be connected via line **868.** In some cases the conductive connection (e.g., **868)** between PE conductors of sockets of the supply **802** may be required by certain electrical standards, although it is not mandatory. It shall be appreciated that the PE connection 868 is shown in this example for ease in understanding of various fault scenarios, especially with comparison with the previous figures.

The circuit breaker **830** is normally in a closed state (as shown in FIG. 8) such that a closed circuit condition is provided between the power source **810** and active conductors **820, 828** of sockets **812, 814.** Circuit breaker **830** may be similar to circuit breaker **730.** Thus, when power is being supplied to the external devices **804, 808,** current $I_{OT}$ provided (e.g., generated) by the power source **810** flows through line **852,** circuit breaker **830,** RCD **840,** and line **854.** Current $I_{OT}$ (e.g., total output current: I_Out_Total) may be defined by the following mathematical equation.

$$I_{OT} = I_{O1} + I_{O2},$$

where $I_{O1}$ represents the outgoing current (e.g., flowing from the source **810**) that flows on line **856** to the active conductor **820** of socket **812,** and $I_{O2}$ represents the outgoing current (e.g., flowing from the source **810**) that flows on line **858** to the active conductor **828** of socket **814.** Current $I_{O2}$ continues to flow through pin **890** of plug **834** and cable **882** to the external device **808.**

Unlike the scenario shown in FIG. 7, in the scenario shown in FIG. 8, cable **882** is damaged such that an insulation fault occurs. Thus, at the site of the leakage on cable **882** there is no direct leakage circuit or path between the housing of the device **808.** In such a case, when the user **806** concurrently contacts the exposed wire or cable **882** and housing **870** of device **804,** the current flows through the user **806** back to the power supply **802** via the housing **870** of device **804.** Consequently, the user **806** may be exposed to electric shock since a current loop is formed therethrough (and not through the PE conductor(s) **818, 826** and line **868).**

Generally, current sensitive devices such as RCDs are provided to detect leakage current, however in this case, the RCD **840** may not facilitate protection of the user 806 from being electric shock. The RCD **840** compares currents $I_{OT}$ and $I_{RT}$ (i.e., $I_{R1} + I_{R2}$) to each other and determines that the two currents are the same. Since the two currents are the same, the circuit breaker **830** is not tripped and therefore remains in its closed state. In general, it shall be appreciated that user **806** will be protected while using the circuit of FIG. 8 for similar fault scenarios as were discussed in previous figures. However, there can be three different fault or failure modes in which the user **806** is not protected. These fault or failure modes can include: (1) a first mode in which a fault occurs in relation to a housing of device **804** and a fault occurs in relation to a cable **882** (i.e., scenario shown in FIG. 8); (2) a second mode in which a fault occurs in relation to a housing of device **808** and a fault occurs in relation to cable **880,** and (3) a third mode in which faults occur in relation to cables **880, 882.** Scenarios (1) and (2) are especially relevant when the devices 804 and 808 have electrically conductive housings respectively.

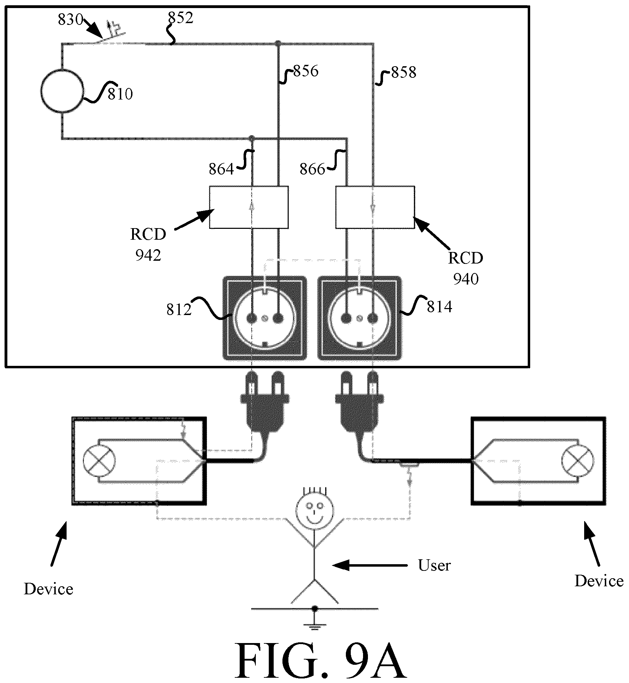

Different methods may be used to address the scenario of FIG. 8. One solution is shown in FIG. 9A in which a first current sensing device **940** (referred without limitation herein as first RCD) is placed between lines **858, 866** connecting power source **810** to plug **814** and a second current sensing device **942** (referred without limitation herein as second RCD) is placed between lines **856, 864** connecting power source **810** to plug **812.** The first RCD **940** is configured to monitor or compare only two currents to each other, i.e., the current on line **858** to the current on line **866.** RCD **940** causes the circuit breaker **830** to transition to its open state when the current on line **858** is not the same as (e.g., greater than or less than) the current on line **866.** The second RCD **942** is configured to compare or monitor only two currents to each other, i.e., the current on line **864** to the current on line **856.** RCD **942** causes the circuit breaker **830** to transition to its open state when the current on line **864** is not the same as (e.g., greater than or less than) the current on line **856.**

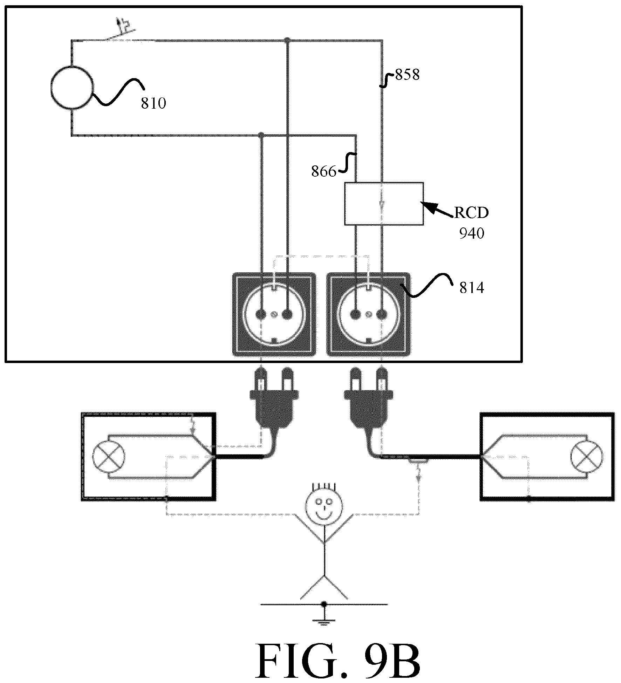

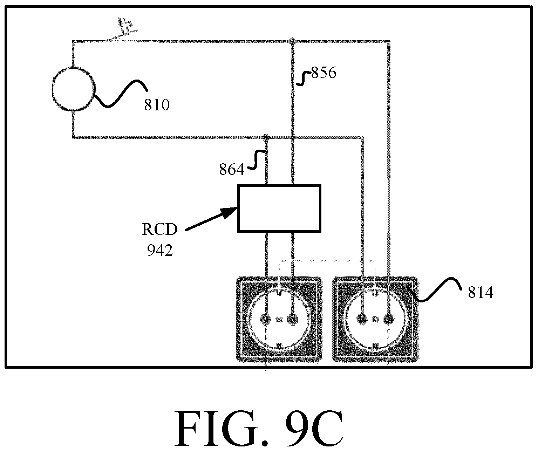

When the fault scenario such as that shown in FIG. 8 occurs in the arrangement shown in FIG. 9, the current balance monitored by at least one of the RCDs **940, 942** will be altered, thereby causing the breaker **830** to trip such that the source **810** is disconnected from the sockets **812, 814.** For example, some of the current flowing through line **858** will flow through the user, thereby causing mismatch between the magnitude of currents flowing in lines **858** and **866.** This will be detected by the first RCD **940,** which will trip the breaker **830.** Similarly, the current which the user's body draws from line **858** will return to the source **810** via line **864,** thereby causing a mismatch between the magnitude of currents flowing in lines **856** and **864.** This will be detected by the second RCD **942,** which will trip the breaker **830.** For ease of understanding, these non-limiting examples assumed a certain polarity of the current flowing through the lines.

Another solution is shown in FIGS. 9B-9C in which a single RCD is provided in the circuit rather than two RCDs. This RCD 950 may be provided either between lines **858, 866** connecting power source **810** to plug **814** as shown in FIG. 9B or between lines **856, 864** connecting power source **810** to plug **812** as shown in FIG. 9C. RCDs are costly, and therefore an alternative solution is desirable in which RCDs are eliminated from the circuit or a total number of RCDs in the circuit is minimized.

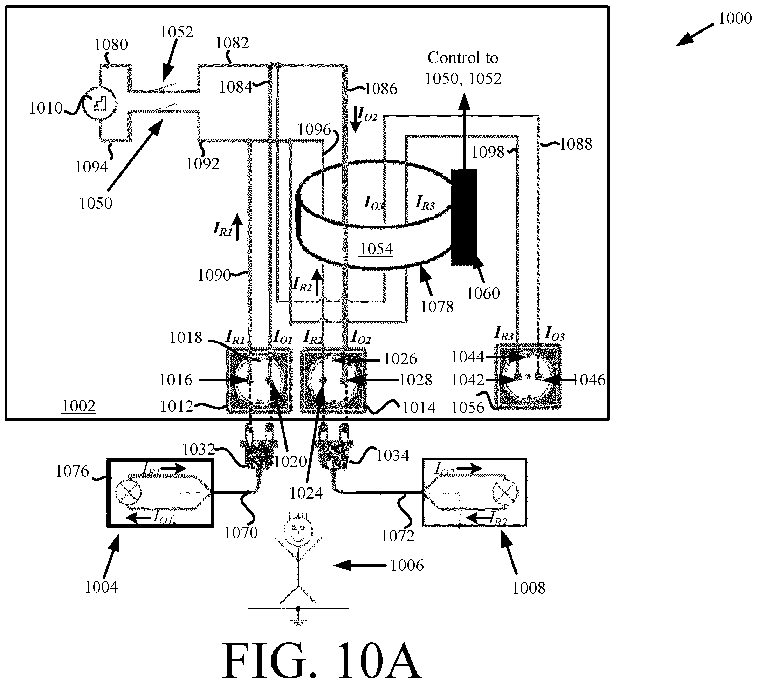

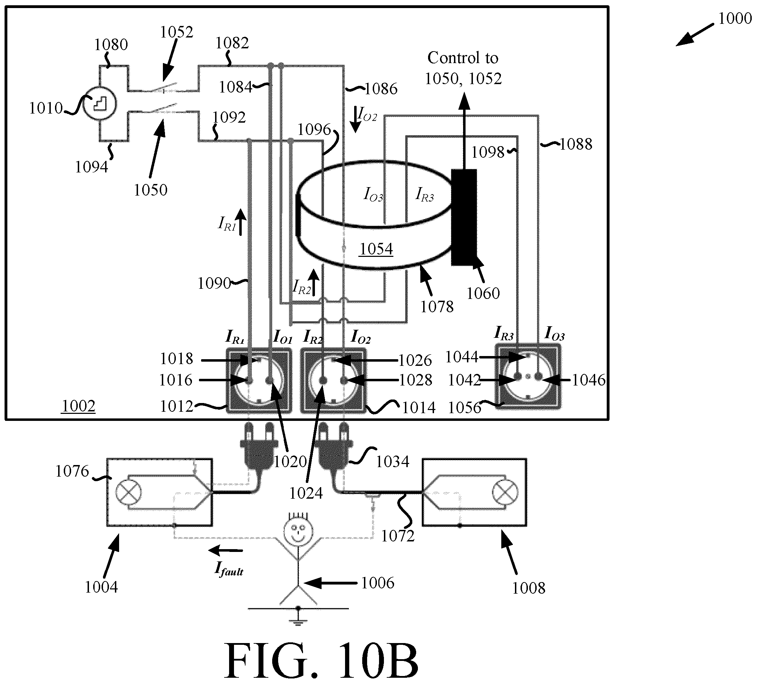

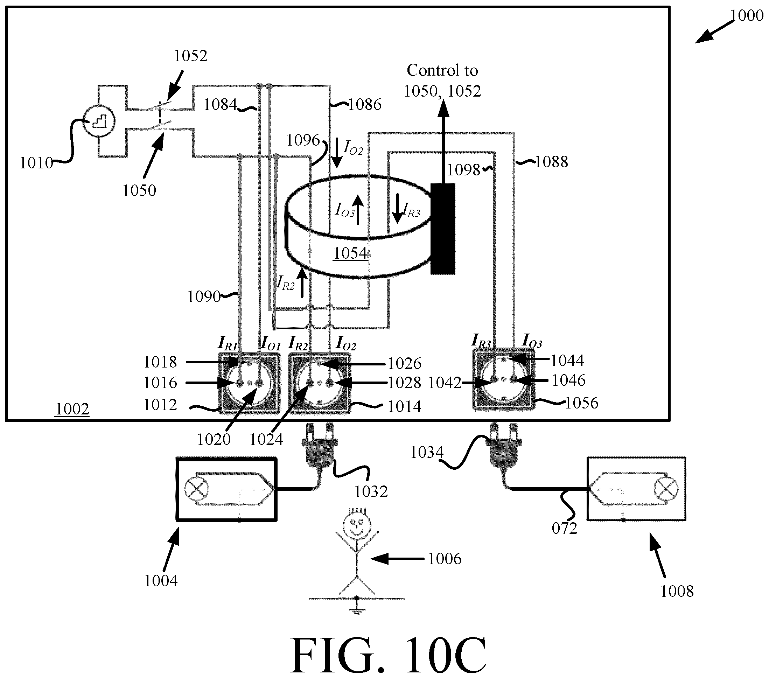

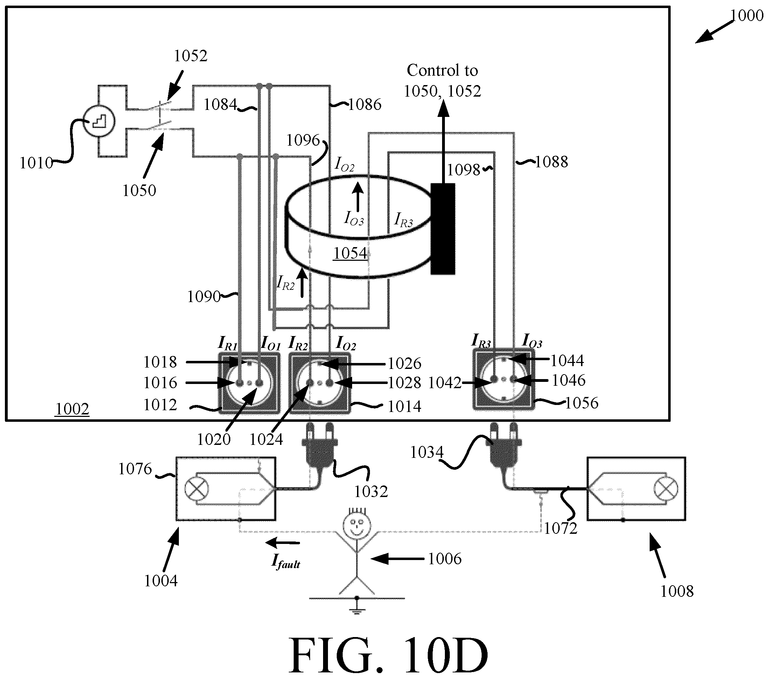

The power supply may be provided with three or more connecting means (e.g., receptacles or sockets of similar or dissimilar types) which are connected in parallel to the same internal output (as non-limiting examples, 50 V, 90 V, 110 V, 220 V, or any standard or non-standard mains voltage output of AC or DC type). It shall be appreciated that the internal output may be provided via the power source as was discussed in the preceding figures, e.g., source **810.** The present solution can protect users of power systems from electric shock in a way that is more cost effective than the solutions, e.g., shown in FIGS. 9A-9C. Illustrations are provided in FIGS. 10-11 that are useful for understanding the present solution.

FIG. 10 shows an example system **1000** in which the present solution is implemented in a non-limiting manner.

System **1000** comprises a power supply **1002** configured to provide power to external device **1004, 1008.** Power supply **1002** can include, but is not limited to, the energy storage module(s) discussed above in relation to FIGS. 1-5. For example, power supply 1002 may be the same as or similar to energy storage module **100** of FIG. 1. Some of the components of system **1000** may be similar to those discussed in context of FIGS. 6 - 9.

Power supply **1002** comprises a power source **1010** (e.g., the same as or similar to power source **710** of FIG. 7), one or more circuit breaker(s) **1050, 1052,** a current sensing device (e.g., referred to in non-limiting manner as a residual current sensing element ("RCSE")) **1054,** and connecting means or receptacles (referred to herein in a non-limiting manner as sockets) **1012, 1014, 1056** of similar or dissimilar type. Power source **1010** is configured to provide (e.g., generate) a power signal (e.g., DC or AC voltage and/or current) to be supplied to the sockets **1012, 1014, 1056.**

Socket **1012** comprises a neutral conductor **1016,** an active conductor **1020** and PE conductor(s) **1018.** The active conductor **1020** is electrically connected to the power source **1010** via lines **1080, 1082, 1084** and circuit breaker **1052.** The active conductor **1020** comprises a line or phase wire capable of carrying a voltage (e.g., as non-limiting examples, 50 V, 90 V, 110 V, 220 V or any standard or non-standard DC or AC voltage, e.g., mains voltage) (e.g., relative to ground) when the power supply **1002** is turned on. The neutral conductor **1016** is electrically connected to a power source **1010** via lines **1090, 1092, 1094** and circuit breaker **1050.** It shall be appreciated that for some applications one of the breakers **1050** and **1052** (e.g., breaker **1050**) may not be required, i.e., just breaker **1052,** or one of the breakers **1050** and **1052** may be sufficient. The neutral conductor **1016** comprises a wire that may carry voltage of the negative pole of the power source **1010,** e.g., zero volts relative to ground. It receives and returns alternating current to the source **1010** during normal operation. As discussed in the context of FIG. 1, the so-called "ground" mentioned here may not necessarily be referenced to earth. Lines **1080-1084, 1090-1094** can include wire(s) and/or cable(s).

Socket **1014** comprises a neutral conductor **1024,** an active conductor **1028** and PE conductor(s) **1026.** The active conductor **1028** is electrically connected to the power source **1010** via lines **1080, 1082, 1086** and circuit breaker **1052.** The active conductor **1028** comprises a line or phase wire capable of carrying a voltage (e.g., as non-limiting examples, 50 V, 90 V, 110 V, 220 V or any standard or non-standard DC or AC voltage, e.g., mains voltage) (e.g., relative to ground) when the power supply **1002** is turned on. The neutral conductor **1024** is electrically connected to a power source **1010** via lines **1096, 1092, 1094** and circuit breaker **1050.** The neutral conductor **1024** comprises a wire that may carry voltage of the negative pole of the power source **1010,** e.g., zero volts relative to ground. It receives and returns alternating current to the source **1010** during normal operation. As discussed in the context of FIG. 1, the so-called "ground" mentioned here may not necessarily be referenced to earth. Lines **1086, 1096** can include wire(s) and/or cable(s).

Socket **1056** comprises a neutral conductor **1042,** an active conductor **1046** and PE conductor(s) **1044.** The active conductor **1046** is electrically connected to the power source **1010** via lines **1080, 1082, 1088** and circuit breaker **1052.** The active conductor **1046** comprises a line or phase wire capable of carrying a voltage (e.g., as non-limiting examples, 50 V, 90 V, 110 V, 220 V or any standard or non-standard DC or AC voltage, e.g., mains voltage) relative to ground when the power supply **1002** is turned on. The neutral conductor **1042** is electrically connected to a power source **1010** via lines **1098, 1092, 1094** and circuit breaker **1050.** The neutral conductor **1042** comprises a wire that may carry voltage of the negative pole of the power source **1010,** e.g., zero volts relative to ground. It receives and returns alternating current to the source **1010** during normal operation. As discussed in the context of FIG. 1, the so-called "ground" mentioned here may not necessarily be referenced to earth. Lines **1088, 1098** can include wire(s) and/or cable(s).

The circuit breakers **1050, 1052** are normally in closed states such that closed circuit conditions are provided between the power source **1010** and conductors of sockets **1012, 1014, 1056.** Thus, when power is being supplied to the external device **1008,** current $I_{OT}$ provided (e.g., generated) by the power source **1010** flows through line **1080,** circuit breaker **1052,** and line **1082.** In normal operation, the current $I_{OT}$ (or I_Out_Total) on line **1082** is defined by the following mathematical equation (1).

$$I_{OT} = I_{O1} + I_{O2} + I_{O3}, \tag{1}$$

where $I_{O1}$ represents the current on line **1084,** $I_{O2}$ represents the current on line **1086,** and $I_{O3}$ represents the current on line **1088.** Line **1084** is connected to the active conductor **1020** of socket **1012.** Line **1086** is connected to the active conductor **1028** of socket **1014.** Line **1088** is connected to the active conductor **1046** of socket **1056.** So, current $I_{O1}$ flows from socket **1012** to device **1004** via plug **1032** and cable **1070.** Current $I_{O2}$ flows from socket **1014** to device **1008** via plug **1034** and cable **1072.** It shall again be appreciated that the specific directions of the currents are merely referred to for brevity and ease of understanding and thus without limitation. Particularly AC currents will change direction of flow regularly. Hence, the terms such as "outgoing", "forward", "return", etc. when referring to such currents should not be construed in a manner which is limiting to the generality or scope of the present teachings.

The return current $I_{RT}$ (or I_Return_Total) on line **1092** may be defined by the following mathematical equation (2).

$$I_{RT} = I_{R1} + I_{R2} + I_{R3}, \tag{2}$$

where $I_{R1}$ represents the current on line **1090**, $I_{R2}$ represents the current on line **1096**, and $I_{R3}$ represents the current on line **1098**. Line **1090** is connected to the neutral conductor **1016** of socket **1012**. Line **1096** is connected to the neutral conductor **1024** of socket **1014**. Line **1098** is connected to the neutral conductor **1042** of socket **1056**. So, current $I_{R1}$ flows from socket **1012** to power source **1010** via lines **1090, 1092,** circuit breaker **1050,** and line **1094** when a device is connected to the socket **1012** and being supplied power from power source **1010** under normal (e.g., no insulation fault) conditions. Current $I_{R2}$ flows from socket **1014** to power source **1010** via lines **1096, 1092,** circuit breaker **1050,** and line **1094** when a device is connected to the socket **1014** and being supplied power from power source **1010** under normal (e.g., no insulation fault) conditions. Current $I_{R3}$ flows to power source **1010** via lines **1098, 1092,** circuit breaker **1050,** and line **1094** when a device is connected to the socket **1056** and being supplied power from power source **1010** under normal (e.g., no insulation fault) conditions. As mentioned in context of previous FIGS., the directions of the currents are merely shown as "forward" or "return" for the ease of understanding and without limitation. It shall be appreciated that while DC current flows in one direction, AC current changes direction of flow during operation, hence the directions of the currents may be opposite of what is shown.

RCSE **1054** is provided to facilitate protection of the user **1006** from being exposed to electric shock, e.g., caused by leakage faults which may result in current leaking to the housings of the devices **1004, 1008** while being powered by the power supply **1002**. It shall be appreciated that in the example shown in FIGS. 10, PE conductors **1018, 1026** and **1044** are not connected to each other, thus unlike examples shown in previous FIGS., the user **1066** would be exposed to electric shock when they are in concurrent contact with housings which have a leakage fault associated with a live wire and neutral wire respectively (e.g., fault scenario as shown in FIG. 10A and assuming RSCE **1054** were not present). The RCSE **1054** can include, but is not limited to, a fluxgate-based residual current sensor and/or a controller **1060**. RSCE **1054** may thus be any kind of known or to-be-known device which can detect and/or monitor currents concurrently in different lines. Controller **1060** may be part of the RCSE or be a device separate from the RCSE. For example, the RCSE **1054** may comprise a fluxgate-based residual current sensor having a part number FG-R02 which is available from KEMET Electronic Corporation of Fort Lauderdale, Florida. The present solution is not limited in this regard, for example, other kinds of current sensors such as Hall-effect sensors and magnetoimpedance sensors (e.g., magnetoresistance, giant magnetoresistance ("GMR"), giant magnetoimpedance ("GMI"), anisotropic magnetoresistance ("AMR"), tunnel magnetoresistance ("TMR")), other flux sensors, their likes or their combinations may also be usable as RCSE. For example, the fluxgate-based residual current sensor may comprise a magnetic core around which a pickup coil is wrapped and that is integrated into a low-voltage oscillator circuit. Imbalances in current feed paths (e.g., forward path) and return current paths couple into the pickup coil through the magnetic core. As such, the fault current condition (e.g., imbalance or mismatch between currents in forward and return paths) can be detected by the controller **1060** based on a change in the oscillator frequency or oscillator duty cycle caused in response to the imbalance. The controller **1060** may provide (e.g., generate) and communicate control signals to circuit breakers **1050, 1052** when a fault current is detected. The control signals may cause the circuit breakers **1050, 1052** to trip or otherwise transition to their open states. In some cases, controller **1060** may even receive signals from circuit breakers **1050, 1052**, e.g., state of the respective breaker.

RCSE **1054** is configured to sense the current on four lines of the circuit, namely the two active (e.g., live or positive) lines and their corresponding two neutral (e.g., negative pole or negative) lines, e.g., associated with a pair of sockets. In FIG. 10, these lines include line **1096** (the neutral line associated with socket **1014**), line **1086** (the active line associated with socket **1014**), line **1098** (the neutral line associated with socket **1056**), and line **1088** (the active line associated with socket **1056**). Line **1096** is arranged such that return current $I_{R2}$ would flow though the magnetic core **1078** of RCSE **1054** in a first direction (e.g., pointing away from socket **1014**), towards power source **1010**. Line **1086** is arranged such that the outgoing current $I_{O2}$ would flow though the magnetic core **1078** of RCSE **1054** in a second direction opposite to the first direction (e.g., a direction pointing away from the power source, and towards socket **1014**). Line **1088** is arranged such that the current $I_{O3}$ would flow in the first direction (i.e., the same direction as current $I_{R1}$). Line **1098** is arranged such that current $I_{R3}$ would flow in the second direction (i.e., the same direction as current $I_{O2}$).

With reference to FIG. 10A, a scenario is shown in which both devices **1004, 1008** are being supplied power from power source **1010**. Device **1004** is coupled to socket **1012,** while device **1008** is coupled to socket **1014**. No insulation fault exists in this scenario. The return currents in lines **1090, 1096, 1098** are determined by the respective load. So, the current in each of these paths equals the load current from the connected load. The load current associated with a load connected to socket **1012** is referred to as $I_{L1}$. The load current associated with a load connected to socket **1014** is referred to as $I_{L2}$. The load current associated with a load connected to socket **1056** is referred to as $I_{L3}$. Thus, the return current $I_{R1}$, $I_{R2}$, $I_{R3}$ may be defined by the following mathematical equations (3)-(5).

$$I_{R1} = -I_{O1} = I_{L1} \tag{3}$$

$$I_{R2} = - I_{O2} = I_{L2} \tag{4}$$

$$I_{R3} = - I_{O3} = I_{L3} \tag{5}$$

Those skilled in the art shall appreciate that the specific polarity of the signs shown in the equations is non-limiting and dependent upon the notation one decides to use. For example, the above equations are meant to signify that the "so-called" forward current here flows in the opposite direction as compared to the "so-called" return current (e.g., with reference to the source **1010),** and that they have equal magnitude in a no leakage scenario (e.g., normal operation). The current $I_{sense}$ sensed by the RCSE **1054** may be defined by the following mathematical equation (6).

$$I_{sense} \propto (I_{O2} + I_{R2}) - (I_{O3} + I_{R3}) \tag{6}$$

In FIG. 10A, $I_{O3}$ and $I_{L3}$ are both equal to zero since there is no load connected to socket **1056.** So, mathematical equation (6) may be rewritten as follows.

$$I_{sense} \propto (I_{O2} + I_{R2}) - (I_{O3} + I_{R3}) = (I_{O2} + - I_{O2}) - (I_{O3} + - I_{O3}) = (0) - (0 + 0) = 0$$

Since $I_{sense} = 0$, the RCSE **1054** does not cause the circuit breakers **1050, 1052** to trip or otherwise transition to their open states.

In the scenario shown in FIG. 10B, both devices **1004, 1008** are being supplied power from power source **1010.** Device **1004** is coupled to socket **1012,** while device **1008** is coupled to socket **1014.** However, cable **1072** is damaged such that an insulation fault occurs there. Additionally, device **1004** has an internal insulation failure which has created an undesired electrical path between the neutral line in the device **1004** and the housing **1076.** As a result, due to the user **1006** being in contact, an additional current flows between the fault in the cable **1072** and the housing **1076** of load **1004.** This additional current is referred to as $I_{fault}$. $I_{O3}$ and $I_{R3}$ are both equal to zero since there is no load connected to socket **1056.** Therefore, currents $I_{O1}$, $I_{O2}$, $I_{R1}$, $I_{R2}$ may be defined by the following mathematical expressions (7)-(10).

$$I_{O2} = I_{L2} + I_{fault} \tag{7}$$

$$I_{R1} = -I_{L1} + I_{fault} \tag{8}$$

$$I_{R2} = - I_{L2} \tag{9}$$

$$I_{O1} = I_{L1} \tag{10}$$

Accordingly, mathematical equation (6) may be re-written as follows.

$$I_{sense} \propto ((I_{L2} + I_{fault}) - I_{L2}) - (0 + 0) = I_{fault}$$

Since $I_{sense}$ is non-zero, (in this case $I_{sense}$ is proportional to (e.g., equal to) $I_{fault}$), it is detected by the RCSE **1054** which may then perform or trigger one or more operations, e.g., to cause at least one of the circuit breakers **1050, 1052** to trip or otherwise transition to their safe (e.g., open) states. These operations can include, but are not limited to, generating control signals and communicating the control signals to the circuit breakers **1050, 1052.** Any known or to be known technique for controlling a circuit breaker or other switch can be used here. It is not essential in context of the present teachings to specify what the minimum magnitude of $I_{sense}$ needs to be for RCSE **1054** to act. Those with normal skill in the art shall appreciate that sensitivity of the sensor (e.g., RCSE **1054**) can be designed or set according to relevant application or regulatory norms. It shall also be appreciated that pursuant to the present teachings, lines (e.g., current flowing therein) associated with two (e.g., different) sockets are measured concurrently or collectively in opposite polarity to each other. In this specific example, the lines (e.g., **1086** and **1088**) which are connected at the same pole (e.g., **1080**) of the source **1010** are arranged such that their currents (e.g., load currents) flowing in the same direction between the source **1010** and their respective socket (e.g., **1014** and **1056**) would cause sense signals in opposite polarity in the RSCE **1054.** In other words, current (e.g., load current) signals from these lines are subtractively (e.g., differentially) combined (e.g., measured and/or monitored) via the sensor (e.g., RSCE **1054**). Similarly, the lines (e.g., **1096** and **1098**) which are connected at the same pole (e.g., **1094)** of the source **1010** are arranged such that their currents (e.g., load currents) flowing in the same direction between the source **1010** and their respective socket (e.g., **1014** and **1056)** would cause signals in opposite polarity at (e.g., in) the RSCE **1054.** In other words, current (e.g., load currents) signals from these lines are also subtractively (e.g., differentially) combined via the sensor (e.g., RSCE **1054).** This causes any currents (e.g., load currents) associated with these sockets to influence RCSE **1054** in opposite polarity to each other. For example, a sense signal caused in RCSE **1054** due to current $I_{O2}$ flowing from the source **1010** would have a polarity opposite to the sense signal caused in RCSE **1054** due to current $I_{O3}$ flowing from the source **1010.** Similarly, a signal caused in RCSE **1054** due to current $I_{R2}$ flowing towards the source **1010** would have a polarity opposite to the signal caused in RCSE **1054** due to current $I_{R3}$ flowing towards the source **1010.** Thus, in general, the present teachings propose measuring/monitoring both pole currents of two sockets in a differential manner (e.g., first pole current $I_{O2}$ of first socket **1014** and first pole current $I_{O3}$ of second socket **1056** measured differentially, and second pole current $I_{R2}$ of first socket **1014** and second pole current $I_{R3}$ of second socket **1056** measured differentially). The advantages will become more clear in the following discussion. Advantageously, with the realization shown in FIG. 10, the RCSE **1054** is also sensitive to current in any single line, or to any two lines connected to opposite polarity poles of the source **1010.** As seen in above example, the RCSE **1054** would also respond should only leakage current flow through the line **1086** (e.g., $I_{R2}$). This would also hold true if currents in other lines monitored by RSCE **1054** were zero (e.g., each of $I_{O2}$, $I_{O3}$ and $I_{R3}$ is zero). It shall be appreciated that even though this situation would not occur when devices connected at sockets **1014** and **1056** are drawing load current from the source **1010,** it is possible in another example leakage scenario with similar fault in device **1004** as shown in FIG. 10B. Assuming that none of the devices **1004** and **1008** is drawing a load current (e.g., each device **1004, 1008** is internally "OFF") whilst being connected to the respective sockets **1012** and **1014,** the leakage current would still flow from the first pole **1080** via the faulty cable **1072** to the body of the user **1006** and then via the user **1006** to the housing **1076** of the device **1004** and then manifesting as $I_{fault}$ in the line **1090** towards the second pole **1094** of the source **1010.** In such a case, currents $I_{O2}$, $I_{O3}$ and $I_{R3}$ would be zero (assuming device **1008** is not drawing a load current from the socket **1014,** and the socket **1056** is not connected to any device thus not drawing any load current from the source **1010).** Another example scenario with "no load current" can be when someone has connected extension cords at sockets **1012** and **1014** (e.g., devices **1004** and **1008** are extension cords or power strips). In such cases, devices **1004** and **1008** may be powered, but not drawing any load current. The proposed solutions can thus provide reliable detection of leakage currents which may expose a user to electric shock, independent of the load currents.

In FIG. 10C, both devices **1004, 1008** are being supplied power from power source **1010.** Device **1004** is coupled to socket **1014,** while device **1008** is coupled to socket **1056.** No insulation fault exists in this scenario. $I_{O1}$ and $I_{R1}$ are both equal to zero since there is no load connected to socket **1012.** So, mathematical equation (6) may be rewritten as follows.

$$I_{sense} \propto (I_{O2} + I_{R2}) - (I_{O3} + I_{R3}) = (I_{O2} + - I_{O2}) - (I_{O3} + - I_{O3}) = (0) - (0) = 0$$

Since $I_{sense}$ = 0, the RCSE **1054** does not cause the circuit breakers **1050, 1052** to trip or otherwise transition to their open states.

In the scenario shown in FIG. 10D, both devices **1004, 1008** are being supplied power from power source **1010.** Device **1004** is coupled to socket **1014,** while device **1008** is coupled to socket **1056.** Cable **1072** is damaged such that an insulation fault occurs there. Additionally, device **1004** has an internal insulation failure which has created an undesired electrical path between the neutral line in the device **1004** and its housing **1076.** As a result, due to the user **1006** being in contact, an additional current flows between the fault in the cable **1072** and the housing **1076** of load **1004.** This additional current is referred to as $I_{fault}$. $I_{O1}$ and $I_{R1}$ are both equal to zero since there is no load connected to socket **1056.** Therefore, currents $I_{O2}$, $I_{O3}$, $I_{R2}$, $I_{R3}$ may be defined by the following mathematical expressions (11)-(14).

$$I_{O2} = I_{L2} \tag{11}$$

$$I_{R2} = -I_{L2} + I_{fault} \tag{12}$$

$$I_{O3} = I_{L3} + I_{fault} \tag{13}$$

$$I_{R3} = -I_{L3} \tag{14}$$

Accordingly, mathematical equation (6) may be re-written as follows.

$$I_{sense} \propto ((I_{L2} - (I_{L2} + I_{fault}) - ((I_{L3} + I_{fault}) - I_{L3}) = (- I_{fault} - I_{fault} = -2(I_{fault})$$

Since $I_{sense}$ is non-zero, (in this case $I_{sense}$ is proportional to (e.g., equal to) **-2($I_{fault}$)),** the RCSE **1054** performs or triggers operations to cause at least one of the circuit breakers **1050, 1052** to trip or otherwise transition to their safe (e.g., open) states. These operations can include, but are not limited to, generating control signals and communicating the control signals to the circuit breakers **1050, 1052.** Any known or to be known technique for controlling a circuit breaker or other switch can be used here. It shall be appreciated that even though equation (6) and any equations referring to it is written in a "proportional to" format, it is non-limiting to the scope of the present teachings. It is, therefore, to be interpreted as "dependent upon", which may also include realizations e.g., where case $I_{sense}$ has an inversely proportional relationship, e.g., to $I_{fault}$.

It shall be appreciated that the present teachings can allow monitoring (and preferably acting in response to) fault current essentially independent of the load current(s). Furthermore, the subtractive differential approach allows influence due to load currents to be removed from the sensor signal based on which the sensor is triggered. The sensor and/or any subsequent processing thus does not need to handle large signal values. For example, if not removed equation, the load current (e.g., $I_{L1}$) which can be several orders larger than the fault or leakage current (e.g., $I_{fault}$) can saturate the sensor and drown the much more interesting fault signal. Since sensor response is made at least significantly insensitive to load current value, dynamic range (e.g., measurement range) of the sensor can be more effectively used. Furthermore, sensitivity (e.g., detectability) to fault current values can be improved. This can result in a more precise and/or cheaper solution for detecting fault current at least in floating (e.g., unearthed) electrical circuits. The present teachings can also allow a reduced number of current sensors needed for monitoring a multi-socket (e.g., 3-socket) power circuit. This can save costs and make the power circuit more compact whilst maintaining safety.

It shall also be appreciated that the present teachings allow detection of faults even when PE conductors of the sockets (e.g., **1012, 1014** and **1056)** are not connected to each other. Thus, the user can be prevented from being exposed to electric shock due to leakage fault in either one or more housings (e.g., fault in two housings) and/or in combination with one or more leakage faults in cables which are connected to the sockets. Thus, as non-limiting examples, types of fault or failure modes which can be addressed can include: (1) a first mode in which a fault occurs in relation to housing of device **1004** and a fault occurs in relation to cable **1072** (i.e., scenario shown in FIG. 10D); (2) a second mode in which a fault occurs in relation to housing of device **1008** and a fault occurs in relation to cable connected to plug **1032,** (3) a third mode in which faults occur in relation to cables **1072, 1032.** (4) a fourth mode in which faults occur in relation to the housings of devices **1004** and **1008.** Similarly, failure modes and their combinations related to the socket **1012** can also be detected.

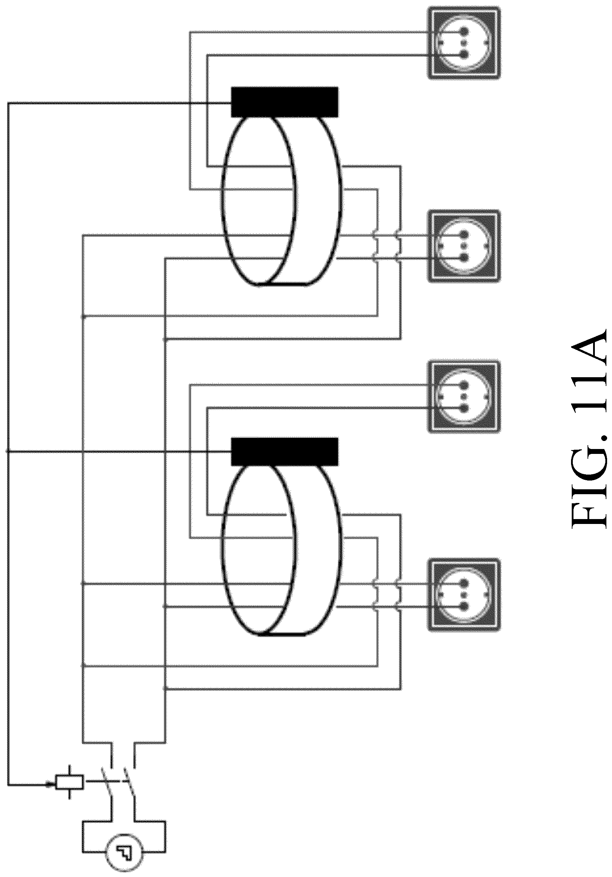

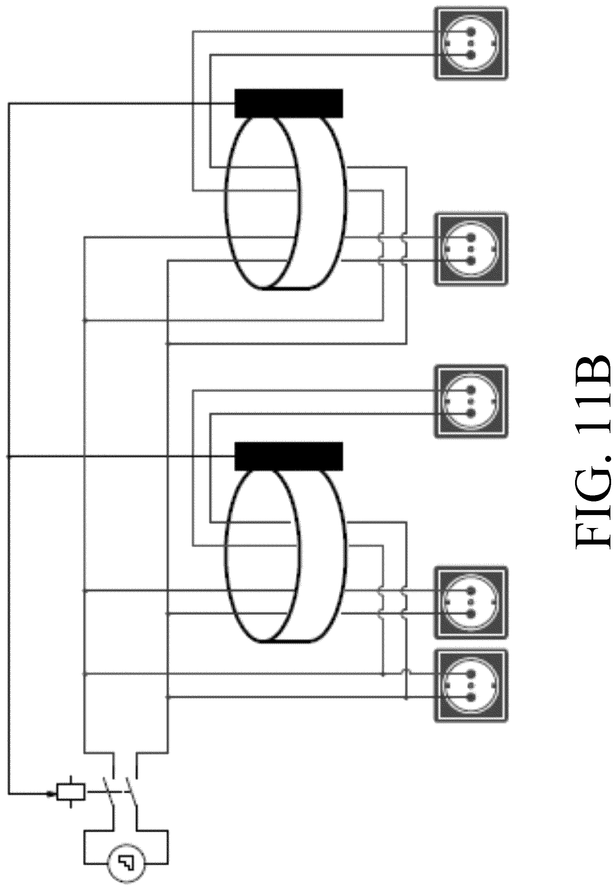

As evident from the above discussion, each two-socket group may be monitored with a single RCSE. Additionally, a single socket can remain unmonitored (i.e., does not require a dedicated RCSE). In other words, for three sockets, the circuit comprises a single RCSE monitoring a pair of sockets, and a single socket not directly monitored by a separate RCSE. If two more sockets are added to the disclosed three socket arrangement (i.e., five sockets total), they can be monitored via a second RCSE, and so forth. If one more socket is added to the disclosed three socket arrangement (i.e., four sockets in total), the fourth socket could be monitored with a second RCSE. FIG. 11A provides an illustration showing a four socket scenario. FIG. 11B provides an illustration showing a five socket scenario.

The present teachings have been described in relation to multiple circuit diagrams. The present teachings are not limited to what is shown. The circuits of two or more of FIGS. 8-11 can be used provided in a single device or separate devices, and used independently or collectively to provide protection to a user of the device(s). For example, the present teachings also disclose a power delivery circuit or sub-circuit, outputs related to which are protected by the protection technique herein disclosed. Hence, the scope of the term "power supply" may also include a power delivery circuit. The power delivery circuit may be a part of a larger system, e.g., an electric vehicle ("EV"), power delivery station, e.g., a charging station, kiosk or any other kinds of system via which power is delivered or dispensed. The "power source" (e.g., **1010)** may or may not be a part of such a power delivery circuit. Moreover, the teachings are not limited to a specific type of power source. Similarly, the terms "sockets" may also include "ports" or any connecting means for delivery of electric power. The present teachings also disclose use of a current sensor in a power delivery circuit (e.g., a power supply) pursuant the herein disclosed any one or more aspects. For example, it may be provided a use of a current sensor (e.g., **1054)** to detect (and preferably prevent) unsafe condition by monitoring electric lines (e.g., **1086, 1096** and **1088, 1098)** for carrying load currents (e.g., $I_{O2}$, $I_{R2}$ and $I_{O3}$, $I_{R3}$) of two electric ports (e.g., **1014** and **1056),** wherein the electric lines are arranged in opposite polarity to each other for load currents with respect to the sensor. Thus, the present teachings also disclose methods of detection of an unsafe condition using a current sensor pursuant the herein disclosed any one or more aspects. The aspects as discussed in this disclosure (e.g., with reference to any of the above FIGS.) apply interchangeably without limitation to the power delivery circuit, the use of sensor, etc.

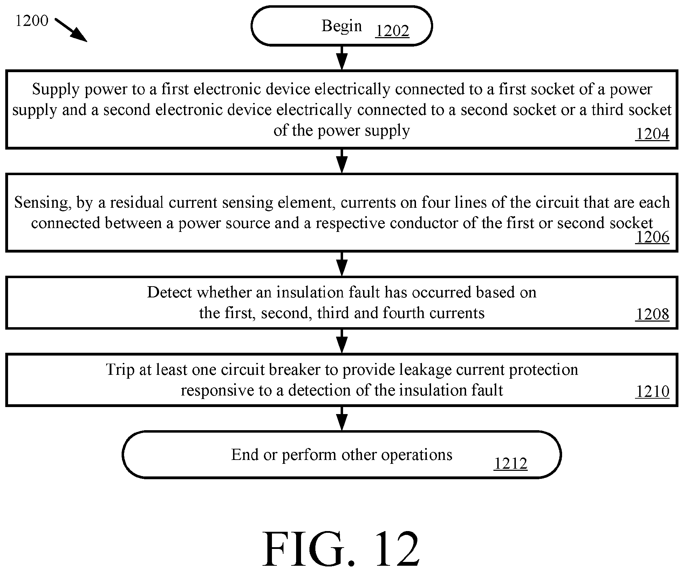

FIG. 12 provides a flow diagram of an illustrative method **1200** for operating a system to provide leakage current protection. Method **1200** can be implemented by a system or circuit such as that shown, for example, in FIGS. 8-10. Method **1200** begins with **1202** and continues with **1204** where a power supply (e.g., power supply **1002** of FIG. 10) provides (e.g., supplies) electrical power at a first socket, at a second socket, and at a third socket, e.g., for supplying to a first device (e.g., device **1004** of FIG. 10) electrically connected to the first socket (e.g., socket **1014** of FIG. 10) of the power supply and a second device (e.g., device **1008** of FIG. 10) electrically connected to the second socket (e.g., socket **1056** of FIG. 10) or the third socket (e.g., socket **1012** of FIG. 10) of the power supply. The electrical power may be provided from a power source, e.g., **1010**.

In **1206,** a residual current sensing element (e.g., residual current sensing element **1054** of FIG. 10) senses currents on four lines (e.g., lines **1086, 1088, 1096, 1098** of FIG. 10) of the circuit that are each connected between a power source (e.g., power source **1010** of FIG. 10) and a respective conductor of the first or second socket. The residual current sensing element can include, but is not limited to, a fluxgate-based residual current sensor. The currents can include, but are not limited to: a first current (e.g., current $I_{O2}$ of FIG. 10) on a first line (e.g., line **1086** of FIG. 10) connected between the power source and an active conductor (e.g., active conduction **1028** of FIG. 10) of the first socket (e.g., socket **1014**); a second current (e.g., current $I_{R2}$ of FIG. 10) on a second line (e.g., line **1096** of FIG. 10) connected between the power source and a neutral conductor (e.g., neutral conductor **1024** of FIG. 10) of the first socket (e.g., socket **1014** of FIG. 10); a third current (e.g., current $I_{O3}$ of FIG. 10) on a third line (e.g., line **1088** of FIG. 10) connected between the power source and an active conductor (e.g., active conductor **1046** of FIG. 10) of the second socket (e.g., socket **1056** of FIG. 10); and a fourth current (e.g., current $I_{R3}$ of FIG. 10) on a fourth line (e.g., line **1098** of FIG. 10) connected between the power source and a neutral conductor (e.g., neutral conductor **1098** of FIG. 10) of the second socket (e.g., socket **1056** of FIG. 10). The first and fourth lines (e.g., line **1086, 1098** of FIG. 10) are arranged such that the first and fourth currents (e.g., currents $I_{O2}$, $I_{R3}$ of FIG. 10) flow through the residual current sensing element in a first direction. The second and third lines (e.g., line **1096, 1088** of FIG. 10) are arranged such that the second and fourth currents (e.g., currents $I_{O3}$, $I_{R3}$ of FIG. 10) flow through the residual current sensing element in a second direction opposite to the first direction.

In **1208,** a detection is made as to whether an insulation fault has occurred based on the first, second, third and fourth currents (e.g., currents $I_{O2}$, $I_{R3}$, $I_{O3}$, $I_{R3}$ of FIG. 10). One or more of these currents may be zero. This detection may be further based on: whether a first combined current associated with the first and second currents (e.g., $I_{O2} + I_{R2}$ of FIG. 10) is equal to a second combined current associated with the third and fourth currents (e.g., $I_{O3} + I_{R3}$ of FIG. 10); and/or a comparison of the first combined current and the second combined current. An occurrence of the insulation fault may be detected when a non-zero current value is obtained by subtracting the second combined current from the first combined current. An occurrence of the insulation fault may not be detected when a zero current value is obtained by subtracting the second combined current from the first combined current.

In **1210,** at least one circuit breaker (e.g., circuit breaker(s) **1050, 1052** of FIG. 10) is tripped to provide leakage current protection responsive to a detection of the insulation fault. Any known or to be known technique for tripping a circuit breaker can be used here.

In view of the forgoing, FIG. 12 shows a method **1200** for operating a power supply circuit. Step **1204** may be considered as providing electrical power, from a power source, at a first socket (e.g., socket **1014**) of a power supply circuit (e.g., power supply circuit **1002**) and a second socket (e.g., socket **1056**) and a third socket (e.g., socket **1012**) of the power supply circuit (e.g., power supply circuit **1002**). Step **1206** may be considered as concurrently monitoring, by a current sensing element (e.g., current sensing element **1054**), first currents (e.g., currents $I_{O2}$, $I_{R2}$) on first lines (e.g., lines **1086, 1096**) and second currents (e.g., currents $I_{O3}$, $I_{R3}$) on second lines (e.g., lines **1088, 1098**). The first lines (e.g., lines **1086, 1096**) facilitate electrical connection of the power source (e.g., power source **1010**) to the first socket (e.g., socket **1014**) of the plurality of sockets (e.g., sockets **1012, 1014, 1056**). The second lines facilitate electrical connection of the power source (e.g., power source **1010**) to the second socket (e.g. socket **1056**) of the plurality of sockets (e.g., sockets **1012, 1014, 1056**). The first currents (e.g., currents $I_{O2}$, $I_{R2}$) have a polarity that is opposite to a polarity of the second currents (e.g., currents $I_{O3}$, $I_{R3}$). Step **1208** may be considered as detecting an insulation fault based on a current imbalance in the concurrent monitoring. Optional step **1210** may be considered as causing at least one circuit breaker (e.g., circuit breaker **1050, 1052**) of the power supply circuit (e.g., power supply circuit **1002**) to trip when the insulation fault is detected.

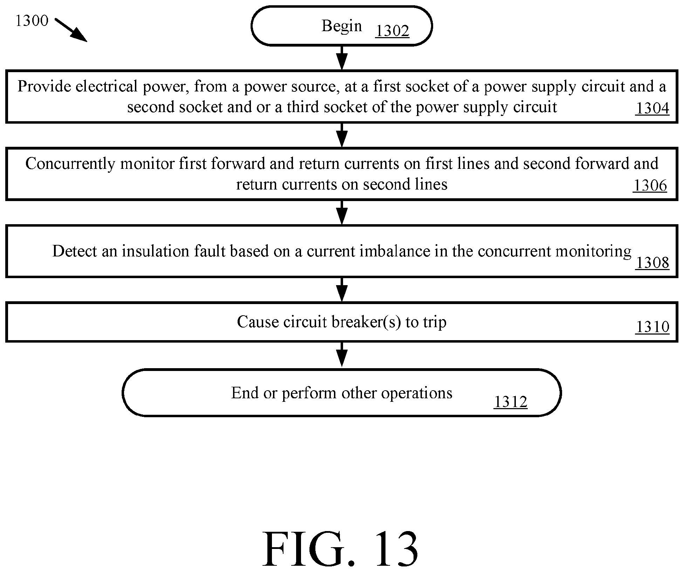

FIG. 13 provides a flow diagram of an illustrative method **1300** for operating a power supply circuit. Method **1300** can be implemented by a system or circuit such as that shown, for example, in FIGS. 8-10. Method **1300** begins with block **1302** and continues to block **1304** where electrical power is provided, from a power source, at a first socket (e.g., socket **1014** of FIG. 10) of a power supply circuit (power supply circuit **1002** of FIG. 10) and a second socket (e.g., socket **1056** of FIG. 10) and or a third socket (e.g., socket **1012** of FIG. 10) of the power supply circuit (e.g., socket **1002** of FIG. 10).

Next in block **1306,** a current sensing element (e.g., current sensing element **1054** of FIG. 10) concurrently monitors (i) first forward and return currents (e.g., current $I_{O2}$, $I_{R2}$ of FIG. 10) on first lines (e.g., lines **1086, 1096** of FIG. 10) and second forward and return currents (e.g., current $I_{O3}$, $I_{R3}$ of FIG. 10) on second lines (e.g., lines **1088, 1098** of FIG. 10). The first lines facilitate electrical connection of the power source circuit to the first socket, and the second lines facilitate electrical connection of the power source circuit to the second socket. The current sensing element can include, but is not limited to, a residual current device or a fluxgate-based residual current sensor.

In block **1308,** an insulation fault is detected on a current imbalance in the concurrent monitoring of block **1306.** This detection may alternatively or additionally be based on: whether a first combined current associated with the first forward and return currents (e.g., $I_{O2} + I_{R2}$) is equal to a second combined current associated with the second forward and return currents (e.g., $I_{O3} + I_{R3}$); a comparison of a first combined current associated with the first forward and return currents (e.g., $I_{O2} + I_{R2}$) and a second combined current associated with the second forward and return currents (e.g., $I_{O3} + I_{R3}$); whether the first forward current (e.g., $I_{O2}$) and the first return current (e.g., $I_{R2}$) are not equal to each other; and/or whether the second forward current (e.g., $I_{O3}$) and the second return current (e.g., $I_{R3}$) are not equal to each other. The insulation fault may be detected when a non-zero current value is obtained (e.g., a value at or above a certain threshold value) by subtracting the second combined current from the first combined current. It shall be appreciated that any of the combined currents may also be zero (e.g., when one or more devices are not drawing any load current).

One or more circuit breakers (e.g., circuit breakers **1050, 1052** of FIG. 10) of the power supply circuit (**1002**) are caused to trip in block **1310** when the insulation fault is detected. The first, second and/or third sockets may be electrically disconnected from the power supply circuit when the at least one circuit breaker is tripped. Subsequently, method **1300** continues to block **1312** where it ends or other operations are performed (e.g., return to block **1302**).

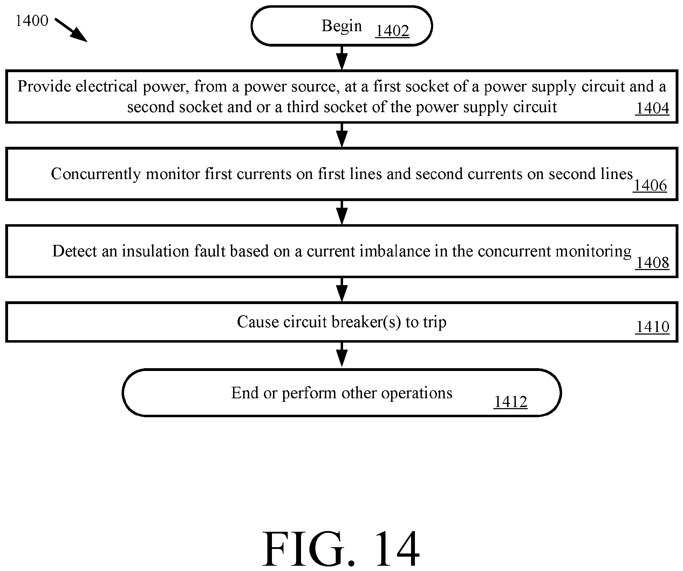

FIG. 14 provides a flow diagram of an illustrative method **1400** for operating a power supply circuit (e.g., power supply circuit **1002** of FIG. 10). Method **1400** can be implemented by a system or circuit such as that shown, for example, in FIGS. 8-10. Method **1400** begins with block **1402** and continues to block **1404** where electrical power is provided, from a power source (e.g., power source **1010** of FIG. 10), at a first socket (e.g., first socket **1014** of FIG. 10) of the power supply circuit and a second socket (e.g., socket **1056** of FIG. 10) and a third socket (e.g., socket **1012** of FIG. 10) of the power supply circuit.

Next in block **1406,** a current sensing element (e.g., current sensing element **1054** of FIG. 10) concurrently monitors first currents (e.g., currents $I_{O2}$, $I_{R2}$ of FIG. 10) on first lines (e.g., lines **1086, 1096** of FIG. 10) and second currents (e.g., currents $I_{O3}$, $I_{R3}$ of FIG. 10) on second lines (e.g., lines **1088, 1098** of FIG. 10). The first lines facilitate electrical connection of the power source to the first socket of the plurality of sockets (e.g., sockets **1012, 1014, 1056** of FIG. 10). The second lines facilitate electrical connection of the power source to the second socket of the plurality of sockets. The first currents have a polarity that is opposite to a polarity of the second current. For example, the first currents ($I_{O2}$, $I_{R2}$) may comprise a first forward current ($I_{O2}$) and a first return current ($I_{R2}$), while the second currents ($I_{O3}$, $I_{R3}$) may comprise a second forward current ($I_{O3}$) and a second return current ($I_{R3}$). The present solution is not limited to the particulars of this example.

Next in block **1408,** the system detects an insulation fault based on a current imbalance in the concurrent monitoring. Optionally, one or more circuit breakers (**1050, 1052**) of the power supply circuit are caused to trip when the insulation fault is detected. Subsequently, method **1400** continues to block **1412** where it ends or other operations are performed (e.g., return to block **1402**).

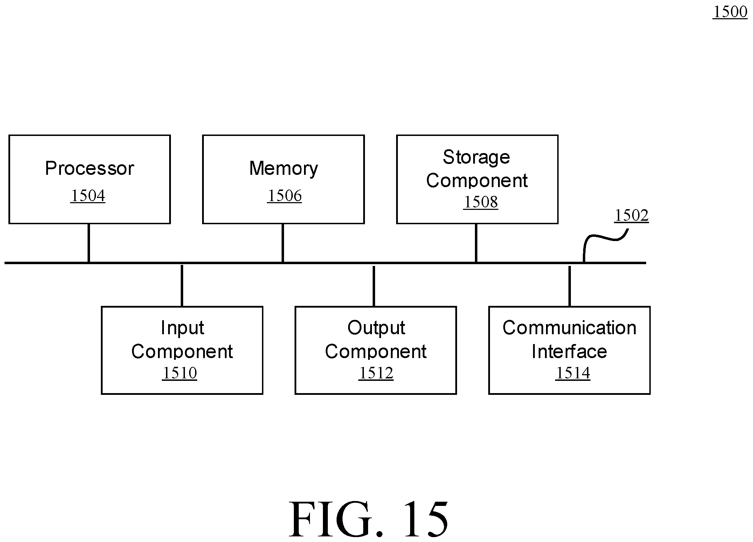

Referring now to FIG. 15, shown is a diagram of example components of a device **1500** according to non-limiting embodiments. Device **1500** may correspond to at least one of module controller **103,** system controller **304** and/or controller **1060,** as an example. In some non-limiting embodiments or aspects, such controllers may include at least one device **1500** and/or at least one component of device **1500**. The number and arrangement of components shown are provided as an example. In some non-limiting embodiments or aspects, device **1500** may include additional components, fewer components, different components, or differently arranged components than those shown. Additionally or alternatively, a set of components (e.g., one or more components) of device **1500** may perform one or more functions described as being performed by another set of components of device **1500.**

As shown in FIG. 15, device **1500** may include bus **1502**, processor **1504**, memory **1506,** storage component **1508,** input component **1510,** output component **1512,** and communication interface **1514**. Bus **1502** may include a component that permits communication among the components of device **1500**. In some non-limiting embodiments or aspects, processor **1504** may be implemented in hardware, firmware, or a combination of hardware and software. For example, processor **1504** may include a microcontroller, a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed to perform a function. Memory **1506** may include random access memory (RAM), read only memory (ROM), and/or another type of dynamic or static storage device (e.g., flash memory, magnetic memory, optical memory, etc.) that stores information and/or instructions for use by processor **1504.**

With continued reference to FIG. 15, storage component **1508** may store information and/or software related to the operation and use of device **1500**. For example, storage component **1508** may include a hard disk (e.g., a magnetic disk, an optical disk, a magneto-optic disk, a solid-state disk, etc.) and/or another type of computer-readable medium. Input component **1510** may include a component that permits device **1500** to receive information, such as via user input (e.g., a touch screen display, a keyboard, a keypad, a mouse, a button, a switch, a microphone, etc.). Additionally or alternatively, input component **1510** may include a sensor for sensing information. Output component **1512** may include a component that provides output information from device **1500** (e.g., a display, a speaker, one or more light-emitting diodes (LEDs), etc.). Communication interface **1514** may include a transceiver-like component (e.g., a transceiver, a separate receiver and transmitter, etc.) that enables device **1500** to communicate with other devices, such as via a wired connection, a wireless connection, or a combination of wired and wireless connections. Communication interface **1514** may permit device **1500** to receive information from another device and/or provide information to another device. For example, communication interface **1514** may include an Ethernet interface, an optical interface, a coaxial interface, an infrared interface, a radio frequency (RF) interface, a universal serial bus (USB) interface, a Wi-Fi® interface, a cellular network interface, and/or the like.

Device **1500** may perform one or more processes described herein. Device **1500** may perform these processes based on processor **1504** executing software instructions stored by a computer-readable medium, such as memory **1506** and/or storage component **1508**. A computer-readable medium may include any non-transitory memory device. A memory device includes memory space located inside of a single physical storage device or memory space spread across multiple physical storage devices. Software instructions may be read into memory **1506** and/or storage component **1508** from another computer-readable medium or from another device via communication interface **1514.** When executed, software instructions stored in memory **1506** and/or storage component **1508** may cause processor **1504** to perform one or more processes described herein. Additionally or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions. It shall be appreciated that the present teachings also disclose a software program product comprising instructions which when executed by a suitable computer processor cause the computer processor to perform the methods herein disclosed.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described scenarios. Rather, the scope of the present solution should be defined in accordance with the following claims and their equivalents.

Thus, the present teachings relate to systems, methods and software products for operating a power supply circuit (PSC). The methods comprise: providing electrical power, from a power source, at a first socket of a power supply circuit and a second socket and/or third socket of PSC; concurrently monitoring, by a current sensing element (i) first currents on first lines (wherein the first lines facilitate electrical connection of the power source to the first socket of the plurality of sockets), and (ii) second currents on second lines (wherein the second lines facilitate electrical connection of the power source to the second socket of the plurality of sockets; detecting an insulation fault based on a current imbalance in the concurrent monitoring; and causing at least one circuit breaker of the power supply circuit to trip when the insulation fault is detected. The first currents have a polarity that is opposite of a polarity of the second currents. The present teachings also disclose use of a current sensor in a power supply circuit.

Without excluding further possible embodiments, certain example embodiments are summarized in the following clauses:

Clause 1: A method for operating a power supply circuit, the method comprising: providing electrical power, from a power source, at a first socket (**1014**) of a power supply circuit (**1002**) and a second socket (**1056**) and a third socket (**1012**) of the power supply circuit (**1002**); concurrently monitoring, by a current sensing element (**1054**), first currents ($I_{O2}$, $I_{R2}$) on first lines (**1086, 1096**), the first lines (**1086, 1096**) facilitating electrical connection of the power source (**1010**) to the first socket (**1014**) of the plurality of sockets (**1012, 1014, 1056**), and second currents ($I_{O3}$, $I_{R3}$) on second lines (**1088**, **1098**), wherein the second lines facilitating electrical connection of the power source (**1010**) to the second socket (**1056**) of the plurality of sockets (**1012**, **1014**, **1056**), wherein first currents ($I_{O2}$, $I_{R2}$) have a polarity that is opposite to a polarity of the second current ($I_{O3}$, $I_{R3}$); detecting an insulation fault based on a current imbalance in the concurrent monitoring; and optionally, in response to detecting the insulation fault, causing the circuit to enter a safe state (e.g., causing at least one circuit breaker (**1050, 1052**) of the power supply circuit (**1002**) to trip).

Clause 2: The method according to Claim 1, wherein the current sensing element (**1054**) comprises a residual current device or a fluxgate-based residual current sensor.

Clause 3: The method according to any of the preceding method clauses, wherein the first, second and or third sockets (**1014, 1056, 1012**) are electrically disconnected from the power supply circuit (**1002**) when the at least one circuit breaker (**1050, 1052**) is tripped.

Clause 4: The method according to any of the preceding method clauses, wherein the first currents ($I_{O2}$, $I_{R2}$) comprise a first forward current ($I_{O2}$) and a first return current ($I_{R2}$), while the second currents ($I_{O3}$, $I_{R3}$) comprise a second forward current ($I_{O3}$) and a second return current ($I_{R3}$).

Clause 5: The method according to any of the preceding method clauses, wherein the first forward current ($I_{O2}$) and the second return current $I_{R3}$ flow through the current sensing element (**1054**) in a first direction, and the first return current ($I_{R2}$) and the second forward current ($I_{O3}$) flow through the current sensing element (**1054**) in a second direction opposite to the first direction.

Clause 6: The method according to any of the preceding method clauses, wherein third currents ($I_{O1}$, $I_{R1}$) on third lines (**1084, 1090**) are unmonitored during use of the power supply circuit, the third lines facilitating electrical connection of the power source (**1010**) to a third socket (**1012**) of the plurality of sockets (**1012, 1014, 1056**).

Clause 7: The method according to any of the preceding method clauses, wherein: one of the first lines (**1086**) facilitates an electrical connection between the power source (**1010**) and an active conductor (**1028**) of the first socket (**1014**); another one of the first lines (**1096**) facilitates an electrical connection between the power source (**1010**) and a neutral conductor (**1024**) of the first socket (**1014**); one of the second third lines (**1088**) facilitates an electrical connection between the power source (**1010**) and an active conductor (**1046**) of the second socket (**1056**); and another one of the second lines (**1098**) facilitates an electrical connection between the power source (**1010**) and a neutral conductor (**1098**) of the second socket (**1056**).

Clause 8: The method according to any of the preceding method clauses, wherein the detecting is further based on whether a first combined current associated with the first currents (e.g., $I_{O2} + I_{R2}$) is equal to a second combined current associated with the second currents (e.g., $I_{O3} + I_{R3}$).

Clause 9: The method according to any of the preceding method clauses, wherein said detecting is further based on a comparison of a first combined current associated with the first currents (e.g., $I_{O2} + I_{R2}$) and a second combined current associated with the second currents (e.g., $I_{O3} + I_{R3}$).

Clause 10: The method according to any of the preceding method clauses, wherein the insulation fault is detected when a non-zero current value is obtained by subtracting the second combined current from the first combined current.

Clause 11: The method according to any of the preceding method clauses, wherein the insulation fault is not detected when a zero current value is obtained by subtracting the second combined current from the first combined current.

Clause 12: A power supply circuit, comprising: a power source (**1010**); a plurality of sockets (**1012, 1014, 1056**) electrically connected to the power source (**1010**); at least one circuit breaker (**1050, 1052**) connected between the power source (**1010**) and the plurality of sockets (**1012, 1014, 1056**); a current sensing element (**1054**) configured to concurrently monitor first currents ($I_{O2}$, $I_{R2}$) on first lines (**1086, 1096**), the first lines (**1086, 1096**) facilitating electrical connection of the power source (**1010**) to a first socket (**1014**) of the plurality of sockets (**1012**, **1014**, **1056**), and second currents ($I_{O3}$, $I_{R3}$) on second lines (**1088, 1098**), the second lines (**1088**, **1098**) facilitating electrical connection of the power source (**1010**) to a second socket (**1056**) of the plurality of sockets (**1012, 1014, 1056**), wherein the first currents ($I_{O2}$, $I_{R2}$) have a polarity that is opposite to a polarity of the second currents ($I_{O3}$, $I_{R3}$); and a controller (**1060**) configured to detect an insulation fault based on a current imbalance in the concurrent monitoring, and cause that at least one circuit breaker (**1050, 1052**) to trip when the insulation fault is detected.

Clause 13: The power supply circuit according to Clause 12, wherein the current sensing element (**1054**) comprises a residual current device or a fluxgate-based residual current sensor.

Clause 14: The power supply circuit according to any of the preceding power supply circuit clauses, wherein the first and or second sockets (**1014, 1056, 1012**) are electrically disconnected from the power supply circuit (**1002**) when the at least one circuit breaker (**1050, 1052**) is tripped.

Clause 15: The power supply circuit according to any of the preceding power supply circuit clauses, wherein the first currents ($I_{O2}$, $I_{R2}$) comprise a first forward current ($I_{O2}$) and a first return current ($I_{R2}$), while the second currents ($I_{O3}$, $I_{R3}$) comprise a second forward current ($I_{O3}$) and a second return current ($I_{R3}$).

Clause 16: The power supply circuit according to any of the preceding power supply circuit clauses, wherein the first forward current ($I_{O2}$) and the second return current $I_{R3}$ flow through the current sensing element (**1054**) in a first direction, and the first return current ($I_{R2}$) and the second forward current ($I_{O3}$) flow through the current sensing element (**1054**) in a second direction opposite to the first direction.

Clause 17: The power supply circuit according to any of the preceding power supply circuit clauses, wherein third currents ($I_{O1}$, $I_{R1}$) on third lines (**1084, 1090**) are unmonitored during use of the power supply circuit, the third lines facilitating electrical connection of the power source (**1010**) to a third socket (**1012**) of the plurality of sockets (**1012, 1014, 1056**).

Clause 18: The power supply circuit according to any of the preceding power supply circuit clauses, wherein: one of the first lines (**1086**) facilitates an electrical connection between the power source (**1010**) and an active conductor (**1028**) of the first socket (**1014**); another one of the first lines (**1096**) facilitates an electrical connection between the power source (**1010**) and a neutral conductor (**1024**) of the first socket (**1014**); one of the second lines (**1088**) facilitates an electrical connection between the power source (**1010**) and an active conductor (**1046**) of the second socket (**1056**); and another one of the second lines (**1098**) facilitates an electrical connection between the power source (**1010**) and a neutral conductor (**1098**) of the second socket (**1056**).

Clause 19: The power supply circuit according to any of the preceding power supply circuit clauses, wherein a detection of the insulation fault is further based on whether a first combined current associated with the first currents (e.g., $I_{O2} + I_{R2}$) is equal to a second combined current associated with the second currents (e.g., $I_{O3} + I_{R3}$).

Clause 20: The power supply circuit according to any of the preceding power supply circuit clauses, wherein the detection of the insulation fault is further based on a comparison of a first combined current associated with the first currents (e.g., $I_{O2} + I_{R2}$) and a second combined current associated with the second currents (e.g., $I_{O3} + I_{R3}$).

Clause 21: The circuit according to any of the preceding power supply circuit clauses, wherein the insulation fault is detected when a non-zero current value or a zero current value is obtained by subtracting the second combined current from the first combined current.

Clause 22: The circuit according to any of the preceding power supply circuit clauses, wherein a trip of the at least one circuit breaker (**1050, 1052**) provides leakage current protection to a user of the circuit.

Clause 23: A method for operating a power supply circuit, the method comprising: providing electrical power, from a power source, at a first socket (**1014**) of a power supply circuit (**1002**) and a second socket (**1056**) and or a third socket (**1012**) of the power supply circuit (**1002**); concurrently monitoring, by a current sensing element (**1054**), first forward and return currents ($I_{O2}$, $I_{R2}$) on first lines (**1086, 1096**) (wherein the first lines (**1086, 1096**) facilitate electrical connection of the power source (**1010**) to the first socket (**1014**) of the plurality of sockets (**1012, 1014, 1056**)), and second forward and return currents ($I_{O3}$, $I_{R3}$) on second lines (**1088, 1098**) (wherein the second lines facilitate electrical connection of the power source (**1010**) to the second socket (**1056**) of the plurality of sockets (**1012, 1014, 1056**)); detecting an insulation fault based on a current imbalance in the concurrent monitoring; and causing at least one circuit breaker (**1050, 1052**) of the power supply circuit (**1002**) to trip when the insulation fault is detected.

Clause 24: The method of Clause 23, wherein the current sensing element (**1054**) comprises a residual current device or a fluxgate-based residual current sensor.

Clause 25: The method of any of the preceding method clauses, wherein the first, second and or third sockets (**1014, 1056, 1012**) are electrically disconnected from the power supply circuit (**1002**) when the at least one circuit breaker (**1050, 1052**) is tripped.

Clause 26: The method of any of the preceding method clauses, wherein the first forward current ($I_{O2}$) and the second return current $I_{R3}$ flow through the current sensing element (**1054**) in a first direction, and the first return current ($I_{R2}$) and the second forward current ($I_{O3}$) flow through the current sensing element (**1054**) in a second direction opposite to the first direction.

Clause 27: The method of any of the preceding method clauses, wherein third forward and return currents ($I_{O1}$, $I_{R1}$) on third lines (**1084, 1090**) are unmonitored during use of the power supply circuit, the third lines facilitating electrical connection of the power source (**1010**) to a third socket (**1012**) of the plurality of sockets (**1012, 1014, 1056**).

Clause 28: The method of any of the preceding method clauses, wherein: one of the first lines (**1086**) facilitates an electrical connection between the power source (**1010**) and an active conductor (**1028**) of the first socket (**1014**); another one of the first lines (**1096**) facilitates an electrical connection between the power source (**1010**) and a neutral conductor (**1024**) of the first socket (**1014**); one of the second third lines (**1088**) facilitates an electrical connection between the power source (**1010**) and an active conductor (**1046**) of the second socket (**1056**); and another one of the second lines (**1098**) facilitates an electrical connection between the power source (**1010**) and a neutral conductor (**1098**) of the second socket (**1056**).

Clause 29: The method of any of the preceding method clauses, wherein the detecting is further based on whether a first combined current associated with the first forward and return currents (e.g., $I_{O2} + I_{R2}$) is equal to a second combined current associated with the second forward and return currents (e.g., $I_{O3} + I_{R3}$).

Clause 30: The method of any of the preceding method clauses, wherein said detecting is further based on a comparison of a first combined current associated with the first forward and return currents (e.g., $I_{O2} + I_{R2}$) and a second combined current associated with the second forward and return currents (e.g., $I_{O3} + I_{R3}$).

Clause 31: The method of any of the preceding method clauses, wherein the insulation fault is detected when a non-zero current value is obtained by subtracting the second combined current from the first combined current.

Clause 32: The method of any of the preceding method clauses, wherein the insulation fault is not detected when a zero current value is obtained by subtracting the second combined current from the first combined current.

Clause 33: A power supply circuit, comprising: a power source (**1010**); a plurality of sockets (**1012**, **1014**, **1056**) electrically connected to the power source (**1010**); at least one circuit breaker (**1050**, **1052**) connected between the power source (**1010**) and the plurality of sockets (**1012**, **1014**, **1056**); a current sensing element (**1054**) configured to concurrently monitor first forward and reverse currents ($I_{O2}$, $I_{R2}$) on first lines (**1086**, **1096**) (wherein the first lines (**1086**, **1096**) facilitate electrical connection of the power source (**1010**) to a first socket (**1014**) of the plurality of sockets (**1012**, **1014**, **1056**)), and second forward and reverse currents ($I_{O3}$, $I_{R3}$) on second lines (**1088**, **1098**) (wherein the second lines (**1088**, **1098**) facilitate electrical connection of the power source (**1010**) to a second socket (**1056**) of the plurality of sockets (**1012**, **1014**, **1056**)); and optionally a controller (**1060**) configured to detect an insulation fault based on a current imbalance in the concurrent monitoring, and further optionally cause that at least one circuit breaker (**1050**, **1052**) to trip when the insulation fault is detected. The sockets (**1012**, **1014**, **1056**) may be electrically connected in parallel with each other and/or the power source (**1010**).

Clause 34: The power supply circuit of Clause 11, wherein the current sensing element (**1054**) comprises a residual current device or a fluxgate-based residual current sensor.

Clause 35: The power supply circuit of any of the preceding power supply circuit clauses, wherein the first and or second sockets (**1014**, **1056**, **1012**) are electrically disconnected from the power supply circuit (**1002**) when the at least one circuit breaker (**1050**, **1052**) is tripped.

Clause 36: The power supply circuit of any of the preceding power supply circuit clauses, wherein the first forward current ($I_{O2}$) and the second return current $I_{R3}$ flow through the current sensing element (**1054**) in a first direction, and the first return current ($I_{R2}$) and the second forward current ($I_{O3}$) flow through the current sensing element (**1054**) in a second direction opposite to the first direction.

Clause 37: The power supply circuit of any of the preceding power supply circuit clauses, wherein third forward and return currents ($I_{O1}$, $I_{R1}$) on third lines (**1084**, **1090**) are unmonitored during use of the power supply circuit, the third lines facilitating electrical connection of the power source (**1010**) to a third socket (**1012**) of the plurality of sockets (**1012**, **1014, 1056**).

Clause 38: The power supply circuit of any of the preceding power supply circuit clauses, wherein: one of the first lines (**1086**) facilitates an electrical connection between the power source (**1010**) and an active conductor (**1028**) of the first socket (**1014**); another one of the first lines (**1096**) facilitates an electrical connection between the power source (**1010**) and a neutral conductor (**1024**) of the first socket (**1014**); one of the second lines (**1088**) facilitates an electrical connection between the power source (**1010**) and an active conductor (**1046**) of the second socket (**1056**); and another one of the second lines (**1098**) facilitates an electrical connection between the power source (**1010**) and a neutral conductor (**1098**) of the second socket (**1056**).

Clause 39: The power supply circuit of any of the preceding power supply circuit clauses, wherein a detection of the insulation fault is further based on whether a first combined current associated with the first forward and return currents (e.g., $I_{O2} + I_{R2}$) is equal to a second combined current associated with the second forward and reverse currents (e.g., $I_{O3} + I_{R3}$).

Clause 40: The power supply circuit of any of the preceding power supply circuit clauses, wherein the detection of the insulation fault is further based on a comparison of a first combined current associated with the first forward and reverse currents (e.g., $I_{O2} + I_{R2}$) and a second combined current associated with the second forward and reverse currents (e.g., $I_{O3} + I_{R3}$).

Clause 41: The power supply circuit of any of the preceding power supply circuit clauses, wherein the insulation fault is detected when a non-zero current value or a zero current value is obtained by subtracting the second combined current from the first combined current.

Clause 42: The power supply circuit of any of the preceding power supply circuit clauses, wherein a trip of the at least one circuit breaker (**1050, 1052**) provides leakage current protection to a user of the circuit.

Clause 43: The method of any of the preceding method clause and/or the power supply circuit of any of the preceding power supply circuit clauses, wherein the first currents ($I_{O2}$, $I_{R2}$) have opposite polarity.

Clause 44: A system, or a system comprising means, configured to perform the steps of any of the preceding method clauses.

Clause 44: Use of a current sensor (e.g., a residual current device or a fluxgate-based residual current sensor) to perform the steps of any of the preceding method clauses.

The breadth and scope of this disclosure should not be limited by any of the above-described example embodiments, but should be defined only in accordance with the following claims and their equivalents.

**Claims**

1. A method for operating a power supply circuit, the method comprising:

   providing electrical power, from a power source, at a first socket of a power supply circuit and a second socket and a third socket of the power supply circuit;
   concurrently monitoring, by a current sensing element,

   • first currents on first lines, the first lines facilitating electrical connection of the power source to the first socket of the plurality of sockets, and
   • second currents on second lines, wherein the second lines facilitating electrical connection of the power source to the second socket of the plurality of sockets,
   • wherein first currents have a polarity that is opposite to a polarity of the second currents;

   detecting an insulation fault based on a current imbalance in the concurrent monitoring; and
   optionally, causing at least one circuit breaker of the power supply circuit to trip when the insulation fault is detected.

2. The method according to claim 1, wherein the current sensing element comprises a residual current device or a fluxgate-based residual current sensor.

3. The method according to claim 1, wherein the first, second and or third sockets are electrically disconnected from the power supply circuit when the at least one circuit breaker is tripped.

4. The method according to claim 1, wherein the first currents comprise a first forward current and a first return current, while the second currents comprise a second forward current and a second return current.

5. The method according to claim 4, wherein the first forward current and the second return current flow through the current sensing element in a first direction, and the first return current and the second forward current flow through the current sensing element in a second direction opposite to the first direction.

6. The method according to claim 1, wherein third currents on third lines are unmonitored during use of the power supply circuit, the third lines facilitating electrical connection of the power source to a third socket of the plurality of sockets.

7. The method according to claim 1, wherein:

one of the first lines facilitates an electrical connection between the power source and an active conductor of the first socket;
another one of the first lines facilitates an electrical connection between the power source and a neutral conductor of the first socket;
one of the second third lines facilitates an electrical connection between the power source and an active conductor of the second socket; and
another one of the second lines facilitates an electrical connection between the power source and a neutral conductor of the second socket.

8. The method according to claim 1, wherein the detecting is further based on whether a first combined current associated with the first currents is equal to a second combined current associated with the second currents.

9. The method according to claim 1, wherein said detecting is further based on a comparison of a first combined current associated with the first currents and a second combined current associated with the second currents.

10. The method according to claim 8, wherein the insulation fault is detected when a non-zero current value is obtained by subtracting the second combined current from the first combined current.

11. The method according to claim 8, wherein the insulation fault is not detected when a zero current value is obtained by subtracting the second combined current from the first combined current.

12. A system configured to perform the steps of any of the preceding method claims.

13. Use of a current sensor to perform the steps of any of the preceding method clauses.

14. The use of claim 13, wherein the current sensor comprises a residual current device or a fluxgate-based residual current sensor.

15. A power supply circuit, comprising:

a power source;
a plurality of sockets electrically connected to the power source;
at least one circuit breaker connected between the power source and the plurality of sockets;
a current sensing element configured to concurrently monitor

• first currents on first lines, the first lines facilitating electrical connection of the power source to a first socket of the plurality of sockets, and
• second currents on second lines, the second lines facilitating electrical connection of the power source to a second socket of the plurality of sockets,
• wherein the first currents have a polarity that is opposite to a polarity of the second currents; and optionally

a controller configured to detect an insulation fault based on a current imbalance in the concurrent monitoring, and further optionally cause that at least one circuit breaker to trip when the insulation fault is detected.

EP 4 742 474 A1

100

104

104

104    102

106

104    101

104    103

105

102

104

FIG. 1A

FIG. 1B

EP 4 742 474 A1

FIG. 1C

Control Bus
Interface

Power Out
Interface
151

Top
Cover
105

100

101

Bottom
Cover
106

FIG. 1D

FIG. 1E

EP 4 742 474 A1

FIG. 2A

EP 4 742 474 A1

200

202

202a

202b

FIG. 2B

FIG. 2C

FIG. 3A

FIG. 3B

302b
310
306
302a
300
302
302d
302c
308-1
308-2

EP 4 742 474 A1

FIG. 4

Chart Title

EP 4 742 474 A1

FIG. 5

FIG. 6

# FIG. 7

FIG. 8

FIG. 9A

EP 4 742 474 A1

FIG. 9B

FIG. 9C

FIG. 10A

FIG. 10B

EP 4 742 474 A1

**FIG. 10C**

FIG. 10D

EP 4 742 474 A1

FIG. 11A

FIG. 11B

1200 ⬊

```
                                    ( Begin  1202 )
                                          │
                                          ▼
┌─────────────────────────────────────────────────────────────────────────────┐
│  Supply power to a first electronic device electrically connected to a first  │
│  socket of a power supply and a second electronic device electrically         │
│  connected to a second socket or a third socket of the power supply     1204  │
└─────────────────────────────────────────────────────────────────────────────┘
                                          │
                                          ▼
┌─────────────────────────────────────────────────────────────────────────────┐
│  Sensing, by a residual current sensing element, currents on four lines of    │
│  the circuit that are each connected between a power source and a respective  │
│  conductor of the first or second socket                                1206  │
└─────────────────────────────────────────────────────────────────────────────┘
                                          │
                                          ▼
┌─────────────────────────────────────────────────────────────────────────────┐
│  Detect whether an insulation fault has occurred based on                     │
│  the first, second, third and fourth currents                           1208  │
└─────────────────────────────────────────────────────────────────────────────┘
                                          │
                                          ▼
┌─────────────────────────────────────────────────────────────────────────────┐
│  Trip at least one circuit breaker to provide leakage current protection      │
│  responsive to a detection of the insulation fault                      1210  │
└─────────────────────────────────────────────────────────────────────────────┘
                                          │
                                          ▼
                  ( End or perform other operations   1212 )
```

# FIG. 12

1300

Begin  1302

Provide electrical power, from a power source, at a first socket of a power supply circuit and a second socket and or a third socket of the power supply circuit          1304

Concurrently monitor first forward and return currents on first lines and second forward and return currents on second lines          1306

Detect an insulation fault based on a current imbalance in the concurrent monitoring  1308

Cause circuit breaker(s) to trip          1310

End or perform other operations          1312

# FIG. 13

1400

Begin 1402

Provide electrical power, from a power source, at a first socket of a power supply circuit and a second socket and or a third socket of the power supply circuit 1404

Concurrently monitor first currents on first lines and second currents on second lines 1406

Detect an insulation fault based on a current imbalance in the concurrent monitoring 1408

Cause circuit breaker(s) to trip 1410

End or perform other operations 1412

FIG. 14

FIG. 15

# EP 4 742 474 A1

## EUROPEAN SEARCH REPORT

**Application Number**

EP 24 21 2209

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 533 821 A (MARK KOSTANJSEK [GB]) 6 July 2016 (2016-07-06) | 1-3,6, 12-15 | INV. H02H3/33 |
| A | * abstract * * figure 1 * * paragraph [0028] - paragraph [0042] * | 4,5,7-11 | |
| X | US 5 239 438 A (ECHTLER KARL [DE]) 24 August 1993 (1993-08-24) | 1-3,6, 12-15 | |
| A | * abstract * * figure 1 * * column 3, line 33 - column 4, line 55 * | 4,5,7-11 | |
| A | US 7 215 519 B2 (BOEING CO [US]) 8 May 2007 (2007-05-08) * abstract * * figure 1 * * column 5, line 32 - column 6, line 24 * | 1-15 | |
| A | WO 2012/065224 A1 (GATO BALDAMERO [AU]; MARTIN RICHARD IAN [AU]) 24 May 2012 (2012-05-24) * abstract * * figure 1 * * page 7, line 14 - page 8, line 30 * | 1-15 | **TECHNICAL FIELDS SEARCHED (IPC)** H02H |

The present search report has been drawn up for all claims

| Place of search | Date of completion of the search | Examiner |
|---|---|---|
| Munich | 17 May 2025 | Operti, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2209

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2025

| Patent document cited in search report | | Publication date | Patent family member(s) | | Publication date |
|---|---|---|---|---|---|
| GB 2533821 | A | 06-07-2016 | GB | 2533821 A | 06-07-2016 |
| | | | IE | 86800 B1 | 17-05-2017 |
| US 5239438 | A | 24-08-1993 | DE | 4010424 A1 | 02-10-1991 |
| | | | EP | 0452250 A1 | 16-10-1991 |
| | | | JP | H05103416 A | 23-04-1993 |
| | | | US | 5239438 A | 24-08-1993 |
| US 7215519 | B2 | 08-05-2007 | NONE | | |
| WO 2012065224 | A1 | 24-05-2012 | AU | 2011331913 A1 | 02-05-2013 |
| | | | WO | 2012065224 A1 | 24-05-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220037891
- US 20220247030
- US 20220359918
- US 20220360094